(19) Europäisches Patentamt
European Patent Office
Office européen des brevets

(11) Publication number: 0 124 295 B1

# (12) EUROPEAN PATENT SPECIFICATION

(45) Date of publication of patent specification: 03.04.91 (51) Int. Cl.[5]: A01N 47/36

(21) Application number: 84302243.5

(22) Date of filing: 02.04.84

## (54) Stabilized aqueous formulations of sulfonylureas.

(30) Priority: 04.04.83 US 482025
24.02.84 US 581118

(43) Date of publication of application:
07.11.84 Bulletin 84/45

(45) Publication of the grant of the patent:
03.04.91 Bulletin 91/14

(84) Designated Contracting States:
AT BE CH DE FR GB IT LI LU NL SE

(56) References cited:
FR-A- 2 187 227
US-A- 3 288 586
US-A- 4 169 719

JOURNAL OF AGRICULTURAL AND FOOD CHEMISTRY, vol. 27, no. 5, September/October 1979, pages 1023-1026, American Chemical Society, College Park, Maryland, US; M. CHIBA: "Use of ammonium or potassium dihydrogen phosphate to protect pesticides in spray mixtures prepared with alkaline waters"

(73) Proprietor: E.I. DU PONT DE NEMOURS AND COMPANY
1007 Market Street
Wilmington Delaware 19898(US)

(72) Inventor: Hyson, Archibald Miller
Box 253 A R.D. 1
Landenberg Pennsylvania 19350(US)

(74) Representative: Hildyard, Edward Martin et al
Frank B. Dehn & Co. Imperial House 15-19
Kingsway
London WC2B 6UZ(GB)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to stabilized aqueous compositions, said compositions comprising a sulfonylurea or its agriculturally suitable salt with an effective amount of a salt of a carboxylic or an inorganic acid, or with mixtures of such carboxylic or inorganic acid salts, provided that the water solubility of carboxylic or inorganic acid salts at 5° C and a pH of about 6-10 is greater than or equal to 3% and further provided that the pH of a 0.1 molar solution of the carboxylic or inorganic acid salt is between 6 and 10.

Sulfonylureas are known in the literature. For instance, U.S. Patents 4,127,405 and 4,169,719 teach herbicidal sulfonylureas. The aqueous suspension formulations of these herbicides may be stabilized by the technique of the instant invention.

The above-mentioned patents and others disclose sulfonylureas which are highly effective as herbicides. There is however, a need to store agriculturally suitable formulations of such sulfonylureas for long periods of time after they are produced. Maintaining the stability of formulations of such herbicides is extremely important since an unstable formulation will be considerably less effective when utilized. That is to say, the active ingredient must be maintained intact in the formulation if herbicidal effect is to be maximized.

M. Chiba (J. Agric. and Food Chem. 27 (5): 1023-1026) has suggested stabilizing pesticides of the carbamate, organophosphorus or bipyridinium types in alkaline waters by adding e.g. 0.5 g/l of acidic buffering salts. US-A-3,288,586 discloses acid addition salts of arylurea herbicides such as linuron. FR-A-2,187,227 teaches the stabilization of oil-in-water emulsions of herbicides with a hydrotrope.

According to the instant invention, a formulation has been discovered, described below, which serves to maintain the stability of sulfonylurea herbicides.

## Summary of the Invention

This invention relates to a stabilized aqueous suspension which comprises from 1 to 50% of one or more compounds of Formula I or its agriculturally suitable salt of Formula, II each having a particle size of 1-20 microns, with an effective amount of a salt of a carboxylic or an inorganic acid, or with mixtures of such carboxylic or inorganic acid salts, provided that the water solubility of carboxylic or inorganic acid salts at 5° C and at pH 6-10 is greater than or equal to 3% and further provided that the pH of a 0.1 molar aqueous solution of the carboxylic or inorganic acid salt is between 6 and 10. All parts are by weight unless otherwise indicated.

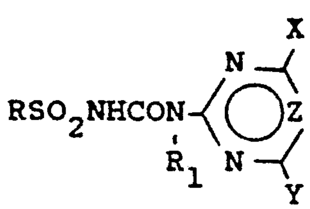

or

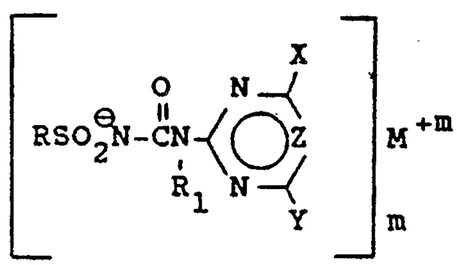

I II

The concentration of the carboxylic or inorganic acid salt or salts in the composition is between 3% and the salt saturation limit of the aqueous solution. The values for the substituents are as follows:

R is

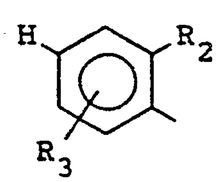

,

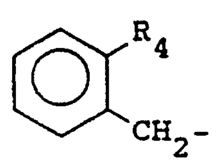

or

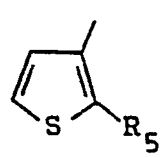

;

$R_1$ is H or $CH_3$:

$R_2$ is F. Cl. Br. $C_1$-$C_4$ alkyl. $SO_2NR_6R_7$, $S(O)_nR_8$, $SO_2NCH_3(OCH_3)$. $CO_2R_9$, $OSO_2R_{10}$. $OR_{11}$. $NO_2$.

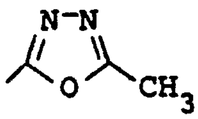, 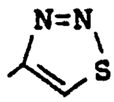, 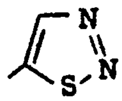 or 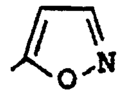 ;

$R_3$ is, H, F, Cl, Br, $CH_3$, $OCH_3$ or $CF_3$:
$R_4$ is Cl, $NO_2$ or $CO_2R_{10}$:
$R_5$ is Cl, Br, $SO_2NR_6R_7$. $S(O)_nR_{10}$ or $CO_2R_{10}$:
$R_6$ and $R_7$ are independently $C_1$-$C_3$ alkyl:
$R_8$ is $C_1$-$C_3$ alkyl or $C_1$-$C_3$ alkyl substituted by 1-5 atoms of F, Cl or Br:
$R_9$ is $C_1$-$C_4$ alkyl, $CH_2CH_2OCH_3$, $CH_2CH_2Cl$ or $CH_2CH=CH_2$:
$R_{10}$ is $C_1$-$C_3$ alkyl:
$R_{11}$ is $C_1$-$C_4$ alkyl, $CH_2CH=CH_2$, $CH_2\equiv CH$, or $C_1$-$C_3$ alkyl substituted with 1-5 atoms of F. Cl or Br:
n is 0 or 2:
Z is CH or N:
X is $CH_3$, $OCH_3$, Cl or $OCHF_2$:
Y is $CH_3$, $OCH_3$, $CH(OCH_3)_2$, $OCHF_2$ or

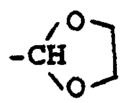 ;

and
$M^{+m}$ is an agriculturally suitable cation: and
m is 1, 2, or 3:
provided that when X is Cl then Z is CH and Y is $OCH_3$ or $OCF_2H$.

The compositions of this invention may contain more than one compound of Formula I or more than one compound of Formula II. In addition, the compositions may contain compounds of both Formula I and Formula II, simultaneously. The compositions of this invention may also optionally contain other herbicides.

Preferred for reasons of their greater stability and/or their more favorable physical properties are:

1) Compositions of the Generic Scope consisting of a compound of Formula I or a compound of Formula II wherein M is an ammonium, substituted ammonium or alkali metal ion and the counter ion of the carboxylic or inorganic acid salt is an ammonium, substituted ammonium or alkali metal ion, and wherein said compound has a particle size of 2-8 microns.

2) Compositions of the Preferred 1 wherein
R is

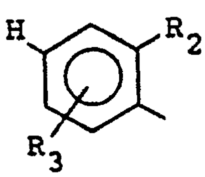, 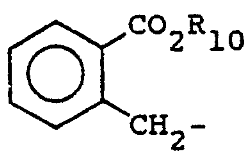 or 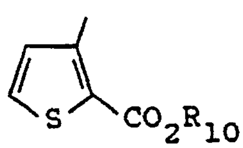 ;

$R_1$ is H:
$R_2$ is Cl, $CH_3$, $SO_2N(CH_3)_2$, $S(O)_nR_8$,$CO_2R_9$, $OSO_2R_{10}$. $OR_{11}$ or $NO_2$:
$R_3$ is H, Cl, $CH_3$, $OCH_3$ or $CF_3$:
$R_8$ is $C_1$-$C_3$ alkyl, $CF_3$, $CF_2H$ or $CF_2CF_2H$:
$R_9$ is $C_1$-$C_4$ alkyl: and
$R_{11}$ is $C_1$-$C_4$ alkyl, $CF_3$, $CF_2H$ or $CF_2CF_2H$.

3) Compositions of the Preferred 2 wherein the compound is an agriculturally suitable salt of Formula II.

4) Compositions of the Preferred 3 wherein the cation of the compound of Formula II and the cation of the carboxylic or inorganic acid salt are identical.

5) Compositions of the Generic Scope wherein the concentration of the carboxylic or inorganic acid salt or salts is greater than 10% and less than 40% or the salt saturation limit of the solution.

6) Compositions or the Preferred 1 wherein the concentration of the carboxylic or inorganic acid salt or salts is greater than 10% and less than 40% or the salt saturation limit of the solution.

7) Compositions of the Preferred 2 wherein the concentration of the carboxylic or inorganic acid salt or

salts is greater than 10% and less than 40% or the salt saturation limit of the solution.

8) Compositions of the Preferred 3 wherein the concentration of the carboxylic or inorganic acid salt or salts is greater than 10% and less than 40% or the salt saturation limit of the solution.

9) Compositions of the Preferred 4 wherein the concentration of the caboxylic or inorganic acid salt or salts is greater than 10% and less than 40% or the salt saturation limit of the solution.

10) Compositions of the Generic Scope wherein the salt or salts are selected from $C_1$-$C_3$ carboxylic acids and inorganic acid salts.

11) Compositions of the Preferred 1 wherein the salt or salts are selected from $C_1$-$C_3$ carboxylic acids and inorganic acid salts.

12) Compositions of the Preferred 2 wherein the salt or salts are selected from $C_1$-$C_3$ carboxylic acids and inorganic acid salts.

13) Compositions of the Preferred 3 wherein the salt or salts are selected from $C_1$-$C_3$ carboxylic acids and inorganic acid salts.

14) Compositions of the Preferred 4 wherein the salt or salts are selected from $C_1$-$C_3$ carboxylic acids and inorganic acid salts.

Specifically preferred for reasons of their greatest stability and/or greatest utility are compositions containing compounds of Formula II selected from the agriculturally suitable salts of:

2-[[(4-chloro-6-methoxypyrimidin-2-yl)aminocarbonyl]aminosulfonyl]benzoic acid, ethyl ester:

2-[[(4-methoxy-6-methyl-1,3,5-triazin-2-yl)aminocarbonyl]aminosulfonyl]benzoic acid, methyl ester:

2-[[(4-6-dimethylpyrimidin-2-yl)aminocarbonyl]aminosulfonyl]benzoic acid, methyl ester:

2-chloro-N-[(4-methoxy-6-methyl-1,3,5-triazin-2-yl)aminocarbonyl]benzenesulfonamide:

2-[[(4,6-dimethoxypyrimidin-2-yl)aminocarbonyl]aminosulfonylmethyl]benzoic acid, methyl ester:

3-[[(4-methoxy-6-methyl-1,3,5-triazin-2-yl)aminocarbonyl]aminosulfonyl[-2-thiophenecarboxylic acid methyl ester:

N-[(4,6-dimethylpyrimidin-2-yl)aminocarbonyl]-2-hydroxybenzenesulfonamide, ethanesulfonate:

and compositions containing carboxylic or inorganic acid salts preferably selected from:

diammonium hydrogen phosphate:

ammonium acetate:

lithium acetate:

sodium acetate:

potassium acetate: or

sodium thiocyanate:

and compositions containing:

the ammonium salt of 2-chloro-N-[(4-methoxy-6-methyl-1,3,5-triazin-2-yl)aminocarbonyl]benzene sulfonamide and diammonium hydrogen phosphate.

## Detailed Description of the Invention

This invention relates to stable and readily dispersible concentrated liquid suspensions of compounds of Formula I or their agriculturally suitable salts of Formula II in aqueous salt solutions. Compounds of Formula I are useful herbicides and their preparation is known in the art. See, for example, U.S. Patents 4,127,405 and 4,169,719. Agriculturally suitable salts of Formula II are also useful herbicides and can be prepared by a number of ways known to the art. For example, metal salts can be made by treating the compounds of Formula I with a solution of an alkali metal salt having a sufficiently basic anion (e.g., hydroxide, alkoxide, carbonate or hydride). Ammonium and substituted ammonium salts can be made by similar techniques.

Salts of Formula II can also be prepared by exchange of one cation for another. Cationic exchange can be effected by direct treatment of an aqueous solution of a salt of Formula II (e.g., alkali metal or ammonium salt) with a solution containing the cation to be exchanged. This method is most effective when the desired salt containing the exchanged cation is insoluble in water and can be separated by filtration.

Exchange may also be effected by passing an aqueous solution of a salt of Formula II (e.g., an alkali metal or ammonium salt) through a column packed with a cation exchange resin containing the cation to be exchanged. In this method, the cation of the resin is exchanged for that of the original salt and the desired product is eluted from the column. This method is particularly useful when the desired salt is water-soluble.

Liquid concentrates are desirable because of the ease with which they can be measured, poured, handled or diluted in preparing aqueous slurries for spraying. Some of the compounds of Formula I and salts of Formula II do not have high solubility in water or other inexpensive solvents and moreover they are chemically unstable over long periods of time in many of these solvents. When dissolved in water alone,

either partially or completely, hydrolysis and/or crystal growth can occur in storage so that stable solutions or suspensions cannot be formulated.

It has been found that stabilized aqueous suspensions of compounds of Formula I or salts of Formula II can be prepared when the aqueous suspending medium contains ammonium, substituted ammonium or alkali metal salts of a carboxylic acid or an inorganic acid or mixtures of such salts provided that the solubility of those salts at pH 6-10 is greater than or equal to 3% at 5 °C and further provided that the pH of a 0.1 molar aqueous solution of the carboxylic or inorganic acid salt is between 6 and 10.

The stabilization which is achieved with these compositions is evident in several ways. First, the chemical stability of the compounds of Formula I or the salts of Formula II in an aqueous suspension is markedly improved which allows formulation of such a suspension that is relatively stable in storage. Second, crystal growth of active ingredient is reduced and a controlled degree of flocculation is imparted to the particles of active herbicide which prevents formation of a hard-to-resuspend cake during storage. Third, the density of the suspending medium may be up to 30% higher than that of water which reduces the settling tendency of the suspended particles. Fourth, the dissolved salts act as an antifreeze which maintains the fluidity of the compositions at temperatures down to -6 °C and below.

Another advantage of these compositions is that, although the compounds of Formula I and the salts of Formula II are relatively insoluble in the suspending medium, when diluted with water in the spray tank they quickly and completely dissolve at the more dilute spray concentrations, provided the pH of the spray solution is about 7.0 or above.

The salts which are preferred in the aqueous medium are ammonium, substituted ammonium or alkali metal salts of a carboxylic or an inorganic acid which are soluble in water at 3% or more at 5 °C. The useful concentration range is from 3% to the saturation point at 5 °C. The preferred salts of the invention will further possess a pH between 6 and 10 for a 0.1 molar aqueous solution. Examples of these salts are diammonium hydrogen phosphate, ammonium acetate, lithium acetate, sodium thiocyanate, sodium acetate, potassium acetate, or compatible mixtures of these. Diammonium hydrogen phosphate and sodium acetate are preferred for compositions containing the ammonium and sodium salts, respectively, of the salts of Formula II. The useful pH range of these compositions is 6-10 although 7-9 is preferred. In most cases, the salts described above will automatically produce a formulation with the desired pH. The anion of the carboxylic or inorganic acid salt may act as an acid acceptor and generate, in situ , the salt of Formula II from its corresponding conjugate acid. Utilizing this principle, one may prepare these compositions of the salts of Formula II directly from the conjugate acids of Formula I. If a higher or lower pH is desired, a small amount of acid or base can be added to the formulation. For example, with diammonium hydrogen phosphate, the pH can be lowered by addition of phosphoric acid or ammonium dihydrogen phosphate. The pH may be raised with ammonium hydroxide. The base or acid may have the same anion or cation as the salt but this is not a requirement.

The formulations of this invention contain about 1 to 50% (preferably 10 to 40%) of the compounds of Formula I or the salts of Formula II suspended in an aqueous solution which contains from 3% to the salt saturation amounts of an agriculturally suitable salt of a carboxylic or an inorganic aced or mixtures thereof as described above. Preferred concentrations of these carboxylic or inorganic acid salts are in the range of about 10-40% in the aqueous phase. The formulation may also contain about 0.1% to 20% of surfactants. Higher ratios of surfactant to active ingredient are sometimes desirable and can be achieved by incorporation into the formulation or by tank mixing.

Among the surfactants used in these compositions are common wetting and dispersing agents such as trimethylnonyl polyethylene glycol ether, sodium alkylnaphthalenesulfonates, sodium alkylbenzenesulfonates, sodium dioctyl sulfosuccinate, sodium dodecyl sulfate, the ammonium and sodium salts of lignosulfonic acid and formaldehyde condensates of naphthalenesulfonic acid. More specific examples are sodium ligninsulfonate and ammonium ligninsulfonate.

Optionally, the formulations may also contain about 0.01-5.0% of thickening or suspending agents such as sodium carboxymethyl cellulose, polysaccharide gums, natural and refined smectite type clays and synthetic silicas.

The compositions of this invention may contain more than one compound of Formula I or more than one compound of Formula II. In addition, the compositions may contain compounds of both Formula I and Formula II, simultaneously. The compositions of this invention may also optionally contain other herbicides. The following herbicides are examples of materials which may be particularly useful in such combinations:

| Common Name | Chemical Name |
|---|---|
| acifluorfen | 5-[2-chloro-4-(trifluoromethyl)-phenoxy]-2-nitrobenzoic acid |
| alachlor | 2-chloro-2',6'-diethyl-N-(methoxy-methyl)acetanilide |
| ametryn | 2-(ethylamino)-4-(isopropylamino)-6-methylthio)-s-triazine |
| amitrole | 3-amino-s-triazole |
| AMS | ammonium sulfamate |
| asulam | methyl sulfanilylcarbamate |
| atrazine | 2-chloro-4-(ethylamino)-6-(isopropyl-amino)-s-triazine |
| barban | 4-chloro-2-butynyl m-chlorocarbanilate |
| benefin | N-butyl-N-ethyl-α,α,α-trifluoro-2,6-dinitro-p-toluidine |
| bensulide | O,O-diisopropyl phosphorodithioate S-ester with N-(2-mercaptoethyl)-benzenesulfonamide |
| benzipram | 3,5-dimethyl-N-(1-methylethyl)-N-(phenylmethyl)benzamide |
| benzoylprop | N-benzoyl-N-(3,4-dichlorophenoxy)-DL-alaine |
| bifenox | methyl 5-(2,4-dichlorophenoxy)-2-nitrobenzoate |
| bromacil | 5-bromo-3-sec-butyl-6-methyluracil |
| bromoxynil | 3,5-dibromo-4-hydroxybenzonitrile |
| butachlor | N-(butoxymethyl)-2-chloro-2,',6'-diethylacetanilide |
| butam | 2,2-dimethyl-N-(1-methylethyl)-N-phenylmethyl)propanamide |
| buthidazole | 3-[5-(1,1-dimethylethyl)-1,3,4-thia-diazol-2-yl]-4-hydroxy-1-methyl-2-imidazolidinone |

| Common Name | Chemical Name |
|---|---|
| butralin | 4-(1,1-dimethylethyl)-N-(1-methylpropyl)-2,6-dinitrobenzenamine |
| cacodylic acid | hydroxydimethylarsine oxide |
| carbetamide | D-N-ethyllactamide carbanilate (ester) |
| CDAA | N-N-diallyl-2-chloroacetamide |
| CDEC | 2-chloroallyl diethyldithiocarbamate |
| chloramben | 3-amino-2,5-dichlorobenzoic acid |
| chlorbromuron | 3-(4-bromo-3-chlorophenyl)-1-methoxy-1-methylurea |
| chloroxuron | 3-[p-(p-chlorophenoxy)phenyl]-1,1-dimethylurea |
| chlorpropham | isopropyl m-chlorocarbanilate |
| cisanilide | cis-2,5-dimethyl-N-phenyl-1-pyrrolidinecarboxamide |
| CMA | calcium methanearsonate |
| cyanazine | 2-[[4-chloro-6-(ethylamino)-s-triazin-2-yl]amino]-2-methylpropionitrile |
| cycloate | S-ethyl N-ethylthiocyclohexanecarbamate |
| cycluron | 3-cyclooctyl-1,1-dimethylurea |
| cyperquat | 1-methyl-4-phenylpyridinium |
| cyprazine | 2-chloro-4-(cyclopropylamino)-6-(isopropylamino)-s-triazine |
| cyprazole | N-[5-(2-chloro-1,1-dimethylethyl)-1,3,4-thiadiazol-2-yl]cyclopropanecarboxamide |
| cypromid | 3',4'-dichlorocyclopropanecarboxanilide |
| dalapon | 2,2-dichloropropionic acid |
| dazomet | tetrahydro-3,5-dimethyl-2H-1,3,5-thiadiazine-2-thione |

| Common Name | Chemical Name |
|---|---|
| DCPA | dimethyl tetrachloroterephthalate |
| desmetryn | 2-(isopropylamino)-4-(methylamino)-6-methylthio)-*s*-triazine |
| diallate | S-(2,3-dichloroallyl)diisopropylthiocarbamate |
| dicamba | 3,6-dichloro-*o*-anisic acid |
| dichlobenil | 2,6-dichlorobenzonitrile |
| dichlorprop | 2-(2,4-dichlorophenoxy)propionic acid |
| diclofop | 2-[4-(2,4-dichlorophenoxy)phenoxy]propanoic acid |
| diethatyl | N-(chloroacetyl)-N-(2,6-diethylphenyl)glycine |
| difenzoquat | 1,2-dimethyl-3,5-diphenyl-1H-pyrazolium |
| dinitramine | $N^4$,$N^4$-diethyl-α,α,α-trifluoro-3,5-dinitrotoluene-2,4-diamine |
| dinoseb | 2-*sec*-butyl-4,6-dinitrophenol |
| diphenamid | N,N-dimethyl-2,2-diphenylacetamide |
| dipropetryn | 2-(ethylthio)-4,6-bis(isopropylamino)-*s*-triazine |
| diquat | 6,7-dihydrodipyrido[1,2-α:2',1'-c]-pyrazinediium ion |
| diuron | 3-(3,4-dichlorophenyl)-1,1-dimethylurea |
| DMSA | disodium methanearsonate |
| endothall | 7-oxabicyclo[2.2.1]heptane-2,3-dicarboxylic acid |
| erbon | 2-(2,4,5-trichlorophenoxy)ethyl 2,2-dichloropropionate |
| ethafluralin | N-ethyl-N-(2-methyl-2-propenyl)-2,6-dinitro-4-(trifluoromethyl)benzenamine |

| Common Name | Chemical Name |
|---|---|
| ethofumesate | (±)-2-ethoxy-2,3-dihydro-3,3-dimethyl-5-benzofuranyl methanesulfonate |
| fenac | (2,3,6-trichlorophenyl)acetic acid |
| fenuron | 1,1-dimethyl-3-phenylurea |
| fenuron TCA | 1,1-dimethyl-3-phenylurea mono(trichloroacetate) |
| flamprop | N-benzoyl-N-(3-chloro-4-fluorophenyl)-DL-alanine |
| fluchloralin | N-(2-chloroethyl)-2,6-dinitro-N-propyl-4-(trifluoromethyl)aniline |
| fluometuron | 1,1-dimethyl-3-(α,α,α-trifluoro-m-tolyl)urea |
| fluorodifen | p-nitrophenyl α,α,α-trifluoro-2-nitro-p-tolyl ether |
| fluridone | 1-methyl-3-phenyl-5-[3-(trifluoromethyl)phenyl]-4(1H)-pyridinone |
| fosamine | ethyl hydrogen (aminocarbonyl)phosphonate |
| glyphosate | N-(phosphonomethyl)glycine and agriculturally suitable salts thereof |
| hexaflurate | potassium hexafluoroarsenate |
| hexazinone | 3-cyclohexyl-6-(dimethylamino)-1-methyl-1,3,5-triazin-2,4(1H,3H)-dione |
| ioxynil | 4-hydroxy-3,5-diiodobenzonitrile |
| isopropalin | 2,6-dinitro-N,N-dipropylcumidine |
| karbutilate | tert-butylcarbamic acid ester with 3-(m-hydroxyphenyl)-1,1-dimethylurea |
| lenacil | 3-cyclohexyl-6,7-dihydro-1H-cyclopentapyrimidine-2,4(3H,5H)-dione |
| linuron | 3-(3,4-dichlorophenyl)-1-methoxy-1-methylurea |
| MAA | methanearsonic acid |

| Common Name | Chemical Name |
| --- | --- |
| MAMA | monoammonium methanearsonate |
| MCPA | [(4-chloro-o-tolyl)oxy]acetic acid |
| MCPB | 4-[(4-chloro-o-tolyl)oxy]butyric acid |
| mecoprop | 2-[(4-chloro-o-tolyl)oxy]propionic acid |
| mefluidide | N-[(2,4-dimethyl-5-[[(trifluoromethyl)sulfonyl]amino]phenyl]-acetamide |
| methalpropalin | N-(2-methyl-2-propenyl)-2,6-dinitro-N-propyl-4-(trifluoromethyl)benzenamide |
| metham | sodium methyldithiocarbamate |
| methazole | 2-(3,4-dichlorophenyl)-4-methyl-1,2,4-oxadiazolidine-3,5-dione |
| metolachlor | 2-chloro-N-(2-ethyl-6-methylphenyl)-N-(2-methoxy-1-methylethyl)acetamide |
| metribuzin | 4-amino-6-tert-butyl-3-(methylthio)-as-triazin-5(4H)one |
| molinate | S-ethyl hexahydro-1H-azepine-1-carbothioate |
| monolinuron | 3-(p-chlorophenyl)-1-methoxy-1-methylurea |
| monuron | 3-(p-chlorophenyl)-1,1-dimethylurea |
| monuron TCA | 3-(p-chlorophenyl)-1,1-dimethylurea mono(trichloroacetate) |
| MSMA | monosodium methanearsonate |
| napropamide | 2-(α-naphthoxy)-N,N-diethylpropionamide |
| naptalam | N-1-naphthylphthalamic acid |
| neburon | 1-butyl-3-(3,4-dichlorophenyl)-1-methylurea |
| nitralin | 4-(methylsulfonyl)-2,6-dinitro-N,N-dipropylaniline |

| Common Name | Chemical Name |
|---|---|
| nitrofen | 2,4-dichlorophenyl p-nitrophenyl ether |
| nitrofluorfen | 2-chloro-1-(4-nitrophenoxy)-4-(trifluoromethyl)benzene |
| norea | 3-(hexahydro-4,7-methanoindan-5-yl)-1,1-dimethylurea |
| norflurazon | 4-chloro-5-(methylamino)-2-(α,α,α-trifluoro-m-tolyl)-3(2H)-pyridazinone |
| oryzalin | 3,5-dinitro-$N^4$,$N^4$-dipropylsulfanilamide |
| oxadiazon | 2-tert-butyl-4-(2,4-dichloro-5-isopropoxyphenyl)$\Delta^2$-1,3,4-oxadiazolin-5-one |
| oxyfluorfen | 2-chloro-1-(3-ethoxy-4-nitrophenoxy)-4-(trifluoromethyl)benzene |
| paraquat | 1,1'-dimethyl-4,4'-bipyridinium ion |
| PBA | chlorinated benzoic acid |
| pendimethalin | N-(1-ethylpropyl)-3,4-dimethyl-2,6-dinitrobenzenamine |
| perfluidone | 1,1,1-trifluoro-N-[2-methyl-4-(phenylsulfonyl)phenyl]methanesulfonamide |
| picloram | 4-amino-3,5,6-trichloropicolinic acid |
| procyazine | 2-[[4-chloro-6-(cyclopropylamino)-1,3,5-triazine-2-yl]amino]-2-methylpropanenitrile |
| profluralin | N-(cyclopropylmethyl)-α,α,α-trifluoro-2,6-dinitro-N-propyl-p-toluidine |
| prometon | 2,4-bis(isopropylamino)-6-methoxy-s-triazine |
| prometryn | 2,4-bis(isopropylamino)-6-(methylthio)-s-triazine |
| pronamide | 3,5-dichloro(N-1,1-dimethyl-2-propynyl)benzamide |

| Common Name | Chemical Name |
| --- | --- |
| propachlor | 2-chloro-N-isopropylacetanilide |
| propanil | 3',4'-dichloropropionalide |
| propazine | 2-chloro-4,6-bis(isopropylamino)-*s*-triazine |
| propham | isopropyl carbanilate |
| prosulfalin | N-[[4-(dipropylamino)-3,5-dinitrophenyl]sulfonyl]-S,S-dimethylsulfilimine |
| prynachlor | 2-chloro-N-(1-methyl-2-propynyl)-acetanilide |
| secbumeton | N-ethyl-6-methoxy-N'-(1-methylpropyl)-1,3,5-triazine-2,4-diamine |
| siduron | 1-(2-methylcyclohexyl)-3-phenylurea |
| simazine | 2-chloro-4,6-bis(ethylamino)-*s*-triazine |
| simetryn | 2,4-bis(ethylamino)-6-(methylthio)-*s*-triazine |
| TCA | trichloroacetic acid and its salts |
| tebuthiuron | N-[5-(1,1-dimethylethyl)-1,3,4-thiadiazol-2-yl]-N,N'-dimethylurea |
| terbacil | 3-*tert*-butyl-5-chloro-6-methyluracil |
| terbuchlor | N-(butoxymethyl)-2-chloro-N-[2-(1,1-dimethylethyl)-6-methylphenyl]acetamide |
| terbuthylazine | 2-(*tert*-butylamino)-4-chloro-6-(ethylamino)-*s*-triazine |
| terbutol | 2,6-di-*tert*-butyl-*p*-tolyl methylcarbamate |
| terbutryn | 2-(*tert*-butylamino)-4-(ethylamino)-6-methylthio)-*s*-triazine |
| tetrafluron | N,N-dimethyl-N'-[3-(1,1,2,2-tetrafluoroethoxy)phenyl]urea |

| Common Name | Chemical Name |
|---|---|
| thiobencarb | S-[(4-chlorophenyl)methyl] diethyl-carbamothioate |
| triallate | S-(2,3,3-trichloroallyl)diisopropyl-thiocarbamate |
| trifluralin | α,α,α-trifluoro-2,6-dinitro-N,N-dipropyl-p-toluidine |
| trimeturon | 1-(p-chlorophenyl)-2,3,3-tri-methylpseudourea |
| 2,3,6-TBA | 2,3,6-trichlorobenzoic acid and agriculturally suitable salts and esters thereof |
| 2,4-D | (2,4-dichlorophenoxy)acetic acid and agriculturally suitable salts and esters thereof |
| 2,4-DB | 4-(2,4-dichlorophenoxy)butyric acid and agriculturally suit-able salts and esters thereof |
| 2,4-DEP | tris[2-(2,4-dichlorophenoxy)-ethyl] phosphite |
| methabenzthiazuron | 1,3-dimethyl-3-(2-benzothiazolyl)-urea |
| chlortoluran | N'-(3-chloro-4-methylphenyl)-N'N-dimethylurea |
| isoproturan | N-(4-isopropylphenyl)-N'N'-di-dimethylurea |
| metoxuran | N'-(3-chloro-4-methoxyphenyl)-N,N-dimethylurea |

When an added herbicide is water-soluble, the pH of the resulting composition may need to be adjusted to lie within the range of 6 to 10.

The methods for making the stabilized compositions of this invention are well known and include ball-milling, bead-milling, sand-milling, colloidmilling and air-milling combined with high-speed blending.

A preferred technique for the preparation of stabilized compositions of Formula II involves suspending a compound of Formula I in water containing surfactants and thickening or suspending agents followed by neutralization with the desired base such as ammonium or sodium hydroxide to a pH of 6.0-10.0, preferably 7.0-9.0, followed by addition of the solid insolubilizing salt to the formulation with agitation. The technique of adding the insolubilizing salt is important. It is best to add the salt in increments to the neutralized conjugate acid in order to develop the precipitate more slowly: otherwise, a tacky solid or gum can form. The resulting suspension is then colloid-milled or bead-milled to a particle size of 1-20 microns, preferably 2-8 microns. The resulting stable aqueous suspension is suitable for use in herbicidal applications.

Example 1

| | |
|---|---|
| 2-Chloro-N-[(4-methoxy-6-methyl-1,3,5-triazin-2-yl)-aminocarbonyl]benzenesulfonamide | 34.20% |
| sodium alkylnaphthalenesulfonate | 2.00% |
| polysaccharide thickener | 0.05% |
| magnesium aluminum silicate thickener | 0.20% |
| diammonium hydrogen phosphate | 16.05% |
| ammonium hydroxide solution (29% $NH_3$) | 5.60% |
| water and impurities | balance |

The sodium alkylnaphthalenesulfonate was dissolved in the water with stirring and the sulfonamide was added in increments and allowed to disperse well. To the dispersion was added the ammonium hydroxide to form the salt of the sulfonamide. The resulting pH was 7.5. Stirring was continued while the diammonium hydrogen phosphate was added and allowed to dissolve (28.5% of solution). The polysaccharide and silicate thickeners were added and the resulting mixture was ground in a sand-mill to produce particles essentially under five microns in size. The pH of the composition was 7.8. On accelerated aging at 45° C for 3 weeks, the formulation did not settle appreciably and the suspended solids remained soft. The entire formulation could be easily fluidized by stirring or shaking. No detectible decomposition of active component occurred while a comparable composition containing no diammonium hydrogen phosphate showed 6% relative decomposition under the same conditions.

Example 2

The following example illustrates an in situ preparation of a composition of a salt of Formula II from the conjugate acid of Formula I.

| | |
|---|---|
| aminocarbonyl]benzenesulfonamide | 33.9% |
| sodium ligninsulfonate | 2.0% |
| 37.5% diammonium hydrogen phosphate solution | 64.1% |

The sodium ligninsulfonate and sulfonamide were added with stirring to the phosphate solution. The mixture then was ground in a sand-mill to give particles of essentially less than five microns. The pH of the composition was 8.25. A sample aged for 2 weeks at 45° C showed 0.47% relative decomposition of active component while a composition containing no phosphate showed 6.0% relative decomposition of the same component. No appreciable settling of the stabilized, aged composition was seen and it was easily fluidized with agitation.

Example 3

A stable suspension of the ammonium salt of the sulfonylurea, 2-[[(4-Chloro-6-methoxypyrimidin-2-yl)-aminocarbonyl]aminosulfonyl]benzoic acid, ethyl ester, was prepared as described in Example 2 using the same percentages of ingredients. The pH of the composition was 7.95. A sample aged for 2 weeks at 45° C showed a 0.4% relative decomposition of active component while a composition without phosphate showed 4.0% relative decomposition of the same component. Settling of the aged composition was slight and it was readily fluidized with agitation.

Example 4

| | |
|---|---|
| 2-[[(4-Methoxy-6-methyl-1,3,5-triazin-2-yl)-aminocarbonyl]aminosulfonyl]benzoic acid, methyl ester | 21.3% |
| sodium ligninsulfonate | 1.11% |
| sodium hydroxide (50%) | 4.48% |
| sodium acetate | 18.71% |
| polysaccharide thickener | 0.05% |
| water and impurities | balance |

With stirring, the sodium ligninsulfonate and sodium hydroxide were dissolved in the water and the sulfonylurea was added in portions and allowed to react to form the water-soluble sodium salt. To the solution was added one-fourth of the sodium acetate and, 5 minutes later, another one-fourth. The remainder of the sodium acetate was added after precipitation of the sulfonylurea salt was observed to be occurring rapidly, after about 15 minutes. The percentage of sodium acetate in the aqueous phase was 25.0. The resulting composition was ground in a sand-mill to produce particles essentially under five microns in size. The polysaccharide thickener was added several minutes before completion of the milling operation. The pH of the composition was 9.03. On aging at 45°C for 3 weeks, suspended solids did not settle and the formulation could be readily fluidized with shaking. No detectable decomposition of active ingredient occurred while a composition without acetate showed 30% decomposition over the same accelerated aging period.

In the following examples, stable suspensions of sulfonylureas are prepared as described in Example 4 using salts as stabilizers against chemical decomposition and to prevent crystal growth:

| Ex. | Sulfonylurea (neutral. agent) | Salt (% in $H_2O$) |
|---|---|---|
| 5 | A (NaOH) | sodium acetate (20) |
| 6 | B ($NH_4OH$) | ammonium acetate (30) |
| 7 | C (NaOH) | sodium thiocyanate (25) |

A = 2-[[(4,6-dimethylpyrimidin-2-yl)aminocarbonyl]aminosulfonyl]benzoic acid, methyl ester.
B = 2-[[(4,6-dimethoxypyrimidin-2-yl)aminocarbonyl]aminosulfonylmethyl]benzoic acid, methyl ester.
C = N-[(4,6-dimethylpyrimidin-2-yl)aminocarbonyl]-2-hydroxybenzenesulfonamide, ethanesulfonate.

Example 8

| | |
|---|---|
| 3-[[(4-Methoxy-6-methyl-1,3,5-triazin-2-yl)aminocarbonyl]aminosulfonyl]-2-thiophenecarboxylic acid, methyl ester | 12.0% |
| sodium alkylnaphthalenesulfonate | 2.4% |
| lithium hydroxide-$H_2O$ | 1.3% |
| lithium acetate | 29.2% |
| water and impurities | remainder |

A stable suspension of the lithium salt of the sulfonylurea was prepared as described in Example 4. The lithium acetate concentration in the aqueous phase was 35%. The pH of the composition was 7.9. A sample aged at 45° C for 3 weeks showed no loss of active ingredient while the loss of the same ingredient from a composition without lithium acetate aged in the same manner was over 20%.

Example 9

The ammonium salt of the sulfonamide of Example 1 is air-milled to give a product with a particle size essentially less than five microns then dispersed with good agitation in a mixture of the remaining components of the formulation of Example 1. The suspension behavior and chemical stability are essentially as described in Example 1.

## Claims

1. A stabilized aqueous composition comprising an agriculturally suitable salt of a carboxylic or an inorganic acid, or mixtures of such carboxylic or inorganic acid salts, provided that the water solubility of carboxylic or inorganic acid salts at 5° C and at pH 6-10 is greater than or equal to 3% and further provided that the pH of a 0.1 molar solution of the carboxylic or inorganic acid salt is between 6 and 10, and from 1 to 50% of one or more compounds having a particle size of 1-20 microns selected from

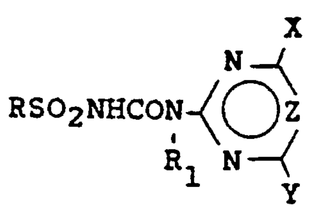

I

or

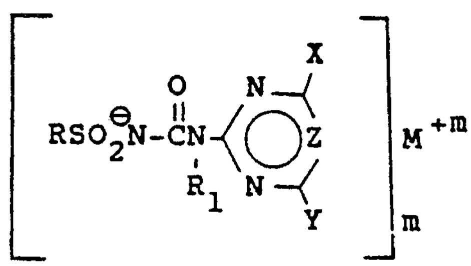

II

wherein the concentration of the carboxylic or inorganic acid salt or salts is between 3% and the salt saturation limit of the aqueous solution, and

R is

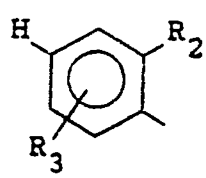

,

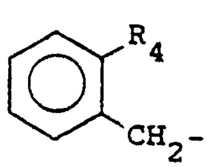

or

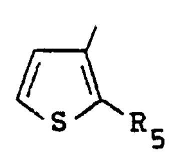

;

$R_1$ is H or $CH_3$;

$R_2$ is F, Cl, Br, $C_1$-$C_4$ alkyl, $SO_2NR_6R_7'$, $S(O)_nR_8$, $SO_2NCH_3(OCH_3)$, $CO_2R_9$, $OSO_2R_{10}$, $OR_{11}$, $NO_2$.

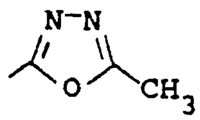 , 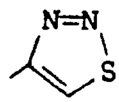 , 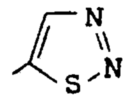 or 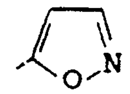 ;

$R_3$ is H, F, Cl, Br, $CH_3$, $OCH_3$ or $CF_3$:
$R_4$ is Cl, $NO_2$ or $CO_2R_{10}$:
$R_5$ is Cl, Br, $SO_2NR_6R_7$, $S(O)_nR_{10}$ or $CO_2R_{10}$:
$R_6$ and $R_7$ are independently $C_1$-$C_3$ alkyl:
$R_8$ is $C_1$-$C_3$ alkyl or $C_1$-$C_3$ alkyl substituted by 1-5 atoms of F, Cl or Br:
$R_9$ is $C_1$-$C_4$ alkyl, $CH_2CH_2OCH_3$, $CH_2CH_2Cl$ or $CH_2CH=CH_2$:
$R_{10}$ is $C_1$-$C_3$ alkyl:
$R_{11}$ is $C_1$-$C_4$ alkyl, $CH_2CH=CH_2$, $CH_2C\equiv CH$, or $C_1$-$C_3$ alkyl substituted with 1-5 atoms of F. Cl or Br:
n is 0 or 2:
Z is CH or N:
X is $CH_3$, $OCH_3$, Cl or $OCHF_2$:
Y is $CH_3$, $OCH_3$, $CH(OCH_3)_2$, $OCHF_2$ or

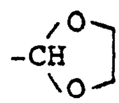 ;

and
$M^{+m}$ is an agriculturally suitable cation: and
m is 1, 2, or 3:
provided that when X is Cl then Z is CH and Y is $OCH_3$ or $OCF_2H$.

2. Compositions of Claim 1 wherein the counterion of the carboxylic or inorganic acid salt is an ammonium, substituted ammonium or alkali metal ion and when the compound is a salt of Formula II, then M is also an ammonium, substituted ammonium or alkali metal ion and wherein said compound has a particle size of 2-8 microns.

3. Compositions of Claim 2 wherein
R is

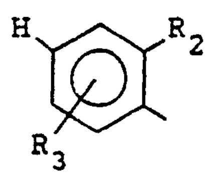 , 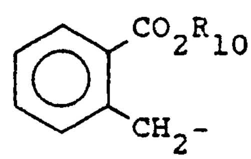 or 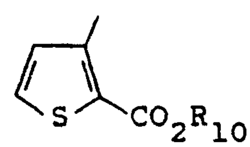 ;

$R_1$ is H:
$R_2$ is Cl, $CH_3$, $SO_2N(CH_3)_2$, $S(O)_nR_8$, $CO_2R_9$, $OSO_2R_{10}$, $OR_{11}$ or $NO_2$:
$R_3$ is H, Cl, $CH_3$, $OCH_3$ or $CF_3$:
$R_8$ is $C_1$-$C_3$ alkyl, $CF_3$, $CF_2H$ or $CF_2CF_2H$:
$R_9$ is $C_1$-$C_4$ alkyl: and
$R_{11}$ is $C_1$-$C_4$ alkyl, $CF_3$, $CF_2H$ or $CF_2CF_2H$.

4. Compositions of Claim 3 wherein the compound is an agriculturally suitable salt of Formula II.

5. Compositions of Claim 4 wherein the cation of the compound of Formula II and the cation of the carboxylic or inorganic acid salt are identical.

6. Compositions of any of the preceding claims comprising a compound of Formula II wherein:
$R_2$ is F, Cl, Br, $C_1$-$C_4$ alkyl, $SO_2NR_6R_7$, $S(O)_nR_8$, $SO_2NCH_3(OCH_3)$, $CO_2R_9$, $OSO_2R_{10}$, $OR_{11}$ or $NO_2$;

$R_{11}$ is $C_1$-$C_4$ alkyl or $C_1$-$C_3$ alkyl substituted with 1-5 atoms of F, Cl or Br;
X is $CH_3$ or $OCH_3$;
Y is $CH_3$, $OCH_3$ or $CH(OCH_3)_2$;
or X may be Cl when Y is $CH_3$ or $OCH_3$.

**7.** Compositions of any of the preceding claims wherein the concentration of the carboxylic or inorganic acid salt or salts is greater than 10% and less than 40% or the salt saturation limit of the solution.

**8.** Compositions of any of the preceding claims wherein the salt or salts are selected from $C_1$-$C_3$ carboxylic acids and inorganic acid salts.

**9.** The composition of Claim 7 wherein the carboxylic or inorganic acid salt is selected from diammonium hydrogen phosphate, ammonium acetate, sodium acetate, lithium acetate, potassium acetate, or sodium thiocyanate.

**10.** The composition of any of the preceding claims comprising 2-chloro-N-[(4-methoxy-6-methyl-1,3,5-triazin-2-yl)aminocarbonyl]benzenesulfonamide, ammonium salt with diammonium hydrogen phosphate.

**11.** The composition of any of Claims 1 to 9 wherein the compound of Formula II is an agriculturally suitable salt of 2-[[(4-chloro-6-methoxypyrimidin-2-yl)aminocarbonyl]aminosulfonyl]benzoic acid, ethyl ester.

**12.** The composition of any of Claims 1 to 9 wherein the compound of Formula II is an agriculturally suitable salt of 2-[[(4-methoxy-6-methyl-1,3,5-triazin-2-yl)aminocarbonyl]aminosulfonyl]benzoic acid, methyl ester.

**13.** The composition of any of Claims 1 to 9 wherein the compound of Formula II is an agriculturally suitable salt of N-[(4,6-dimethylpyrimidin-2-yl)aminocarbonyl]-2-hydroxy-benzenesulfonamide, ethanesulfonate.

**14.** The composition of any of Claims 1 to 9 wherein the compound of Formula II is an agriculturally suitable salt of 3-[[(4-methoxy-6-methyl-1,3,5-triazin-2-yl)aminocarbonyl] aminosulfonyl]-2-thiophenecarboxylic acid, methyl ester.

**15.** The composition of any of Claims 1 to 9 wherein the compound of Formula II is an agriculturally suitable salt of 2-[[(4,6-dimethylpyrimidin-2-yl)aminocarbonyl]aminosulfonyl]benzoic acid, methyl ester.

**16.** The composition of any of Claims 1 to 9 wherein the compound of Formula II is an agriculturally suitable salt of 2-chloro-N-((4-methoxy-6-methyl-1,3,5-triazin-2-yl)aminocarbonyl]benzenesulfonamide.

**17.** The composition of any of Claims 1 to 9 wherein the compound of Formula II is an agriculturally suitable salt of 2-[[(4,6-dimethoxypyrimidin-2-yl)aminocarbonyl]aminosulfonylmethyl]benzoic acid, methyl ester.

**18.** The composition of any of the preceding Claims with an additional herbicide which is not selected from I or II.

**19.** The composition of claim 1 wherein:
(a) the compound of Formula II is as defined in any of Claims 10 to 17:
(b) said salt of a carboxylic or inorganic acid is as defined in Claim 9 or is diammonium hydrogen phosphate when said compound of Formula II is the compound defined in Claim 10;
(c) the concentration of said compound of Formula II is 10 to 40%;
(d) the concentration of said salt of a carboxylic or inorganic acid is greater than 10% and less than 40% or the salt saturation limit of the solution; and
(e) the pH of the composition is in the range 7 to 9.

**20.** A method for the preparation of a composition of any of Claims 1 to 19 which comprises forming an admixture in an aqueous medium of said agriculturally suitable salt of a carboxylic or inorganic acid

and from 1 to 50% of one or more compounds selected from I and II, the concentration of the carboxylic or inorganic acid salt or salts being between 3% and the salt saturation limit of the aqueous solution.

**21.** A method for the preparation of a composition of any of Claims 1 to 19 which comprises
(i) suspending a compound of Formula I in water optionally containing surfactants and/or thickening or suspending agents;
(ii) optionally neutralising said mixture with base to a pH of 6.0 to 10.0 to obtain a salt of Formula II;
(iii) adding said agriculturally suitable salt of a carboxylic or inorganic acid, or mixture therefore; and
(iv) milling the mixture to obtain a slurry of desired particle size.

**22.** A method for the control of undesired vegetation by applying to the locus of such vegetation an effective amount of a herbicidal composition, characterised in
that said herbicidal composition comprises an aqueous dilution of the composition of any of Claims 1 to 19.

Claims for the following Contracting State: AT

**1.** A method for the preparation of a stabilized aqueous composition which comprises forming an admixture in an aqueous medium of an agriculturally suitable salt of a carboxylic or an inorganic acid, or mixtures of such carboxylic or inorganic acid salts, provided that the water solubility of carboxylic or inorganic acid salts at 5°C and at pH 6-10 is greater than or equal to 3% and further provided that the pH of a 0.1 molar solution of the carboxylic or inorganic acid salt is between 6 and 10, and from 1 to 50% of one or more compounds having a particle size of 1-20 microns selected from

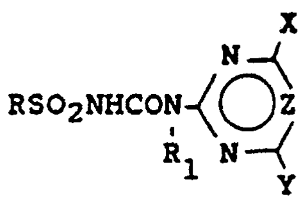

I

or

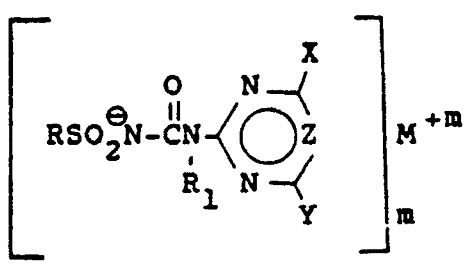

II

wherein the concentration of the carboxylic or inorganic acid salt or salts is between 3% and the salt saturation limit of the aqueous solution, and
R is

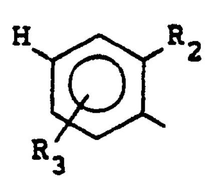 ,

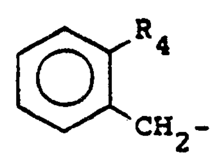 or

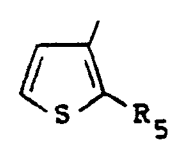 ;

$R_1$ is H or $CH_3$;
$R_2$ is F, Cl, Br, $C_1$-$C_4$ alkyl, $SO_2NR_6R_7$, $S(O)_nR_8$, $SO_2NCH_3(OCH_3)$, $CO_2R_9$ $OSO_2R_{10}$, $OR_{11}$, $NO_2$,

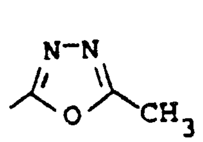 ,

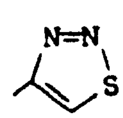 ,

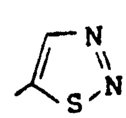 or

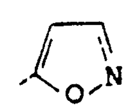 ;

$R_3$ is H, F, Cl, Br, $CH_3$, $OCH_3$ or $CF_3$;
$R_4$ is Cl, $NO_2$ or $CO_2R_{10}$;
$R_5$ is Cl, Br, $SO_2NR_6R_7$, $S(O)_nR_{10}$ or $CO_2R_{10}$;

$R_6$ and $R_7$ are independently $C_1$-$C_3$ alkyl;
$R_8$ is $C_1$-$C_3$ alkyl or $C_1$-$C_3$ alkyl substituted by 1-5 atoms of F, Cl or Br;
$R_9$ is $C_1$-$C_4$ alkyl, $CH_2CH_2OCH_3$, $CH_2CH_2Cl$ or $CH_2CH=CH_2$;
$R_{10}$ is $C_1$-$C_3$ alkyl;
$R_{11}$ is $C_1$-$C_4$ alkyl, $CH_2CH=CH_2$, $CH_2C$ CH, or $C_1$-$C_3$ alkyl substituted with 1-5 atoms of F, Cl or Br;
n is 0 or 2;
Z is CH or N;
X is $CH_3$, $OCH_3$, Cl or $OCHF_2$;
Y is $CH_3$, $OCH_3$, $CH(OCH_3)_2$, $OCHF_2$ or

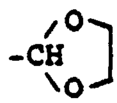 ;

and
$M^{+m}$ is an agriculturally suitable cation; and
m is 1, 2, or 3;
provided that when X is Cl then Z is CH and Y is $OCH_3$ or $OCF_2H$.

2. A method of Claim 1 which comprises
(i) suspending a compound of Formula I in water optionally containing surfactants and/or thickening or suspending agents;
(ii) optionally neutralising said mixture with a base to a pH of 6.0 to 10.0 to obtain a salt of Formula II;
(iii) adding said agriculturally suitable salt of a carboxylic or inorganic acid, or mixture therefore; and
(iv) milling the mixture to obtain a slurry of desired particle size.

3. A method of Claim 1 or 2 wherein the counterion of the carboxylic or inorganic acid salt is an ammonium, substituted ammonium or alkali metal ion and when the compound is a salt of Formula II, then M is also an ammonium, substituted ammonium or alkali metal ion and wherein said compound has a particle size of 2-8 microns.

4. A method of Claim 3 wherein
R is

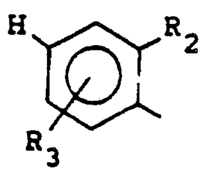 , 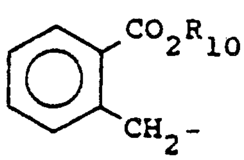 or 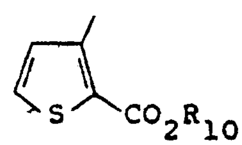 ;

$R_1$ is H;
$R_2$ is Cl, $CH_3$, $SO_2N(CH_3)_2$, $S(O)_nR_8$ $CO_2R_9$, $OSO_2R_{10}$, $OR_{11}$ or $NO_2$;
$R_3$ is H, Cl, $CH_3$, $OCH_3$ or $CF_3$;
$R_8$ is $C_1$-$C_3$ alkyl, $CF_3$, $CF_2H$ or $CF_2CF_2H$;
$R_9$ is $C_1$-$C_4$ alkyl; and
$R_{11}$ is $C_1$-$C_4$ alkyl, $CF_3$, $CF_2H$ or $CF_2CF_2H$.

5. A method of Claim 4 wherein the compound is an agriculturally suitable salt of Formula II.

6. A method of Claim 5 wherein the cation of the compound of Formula II and the cation of the carboxylic or inorganic acid salt are identical.

7. A method of any of the preceding claims in which there is used a compound of Formula II wherein:
$R_2$ is F, Cl, Br, $C_1$-$C_4$ alkyl, $SO_2NR_6R_7$, $S(O)_nR_8$, $SO_2NCH_3(OCH_3)$, $CO_2R_9$, $OSO_2R_{10}$, $OR_{11}$ or $NO_2$;
$R_{11}$ is $C_1$-$C_4$ alkyl or $C_1$-$C_3$ alkyl substituted with 1-5 atoms of F, Cl or Br;

X is $CH_3$ or $OCH_3$;
Y is $CH_3$, $OCH_3$ or $CH(OCH_3)_2$;
or X may be Cl when Y is $CH_3$ or $OCH_3$.

**8.** A method of any of the preceding claims wherein the concentration of the carboxylic or inorganic acid salt or salts is greater than 10% and less than 40% or the salt saturation limit of the solution.

**9.** A method of any of the preceding claims wherein the salt or salts are selected from $C_1$-$C_3$ carboxylic acids and inorganic acid salts.

**10.** A method of Claim 7 wherein the carboxylic or inorganic acid salt is selected from diammonium hydrogen phosphate, ammonium acetate, sodium acetate, lithium acetate, potassium acetate, or sodium thiocyanate.

**11.** A method of any of the preceding claims wherein said composition comprises 2-chloro-N-[(4-methoxy-6-methyl-1,3,5-triazin-2-yl)aminocarbonyl] benzenesulfonamide, ammonium salt with diammonium hydrogen phosphate.

**12.** A method of any of Claims 1 to 10 wherein the compound of Formula II is an agriculturally suitable salt of 2-[[(4-chloro-6-methoxypyrimidin-2-yl)aminocarbonyl]aminosulfonyl]benzoic acid, ethyl ester.

**13.** A method of any of Claims 1 to 10 wherein the compound of Formula II is an agriculturally suitable salt of 2-[[(4-methoxy-6-methyl-1,3,5-triazin-2-yl)aminocarbonyl]aminosulfonyl]benzoic acid, methyl ester.

**14.** A method of any of Claims 1 to 10 wherein the compound of Formula II is an agriculturally suitable salt of N-[(4,6-dimethylpyrimidin-2-yl)aminocarbonyl]-2-hydroxy-benzenesulfonamide, ethanesulfonate.

**15.** A method of any of Claims 1 to 10 wherein the compound of Formula II is an agriculturally suitable salt of 3-[[(4-methoxy-6-methyl-1,3,5-triazin-2-aminocarbonyl] aminosulfonyl]-2-thiophenecarboxylic acid, methyl ester.

**16.** A method of any of Claims 1 to 10 wherein the compound of Formula II is an agriculturally suitable salt of 2-[[(4,6-dimethylpyrimidin-2-yl)aminocarbonyl]-aminosulfonyl]benzoic acid, methyl ester.

**17.** A method of any of Claims 1 to 10 wherein the compound of Formula II is an agriculturally suitable salt of 2-chloro-N-[(4-methoxy-6-methyl-1,3,5-triazin-2-yl)aminocarbonyl]benzenesulfonamide.

**18.** A method of any of Claims 1 to 10 wherein the compound of Formula II is an agriculturally suitable salt of 2-[[(4,6-dimethoxypyrimidin-2-yl)amincarbonyl]-aminosulfonylmethyl]benzoic acid, methyl ester.

**19.** A method of any of the preceding Claims wherein there is added an additional herbicide which is not selected from I or II.

**20.** A method of Claim 1 wherein:
(a) the compound of Formula II is as defined in any of Claims 11 to 18;
(b) said salt of a carboxylic or inorganic acid is as defined in Claim 10 or is diammonium hydrogen phosphate when said compound of Formula II is the compound defined in Claim 11;
(c) the concentration of said compound of Formula II is 10 to 40%;
(d) the concentration of said salt of a carboxylic or inorganic acid is greater than 10% and less than 40% or the salt saturation limit of the solution; and
(e) the pH of the composition is in the range 7 to 9.

**21.** A method for the control of undesired vegetation by applying to the locus of such vegetation an effective amount of a herbicidal composition, wherein said herbicidal composition comprises an aqueous dilution of the composition defined in any of Claims 1 or 3 to 20.

**Revendications**

1. Une composition aqueuse stabilisée comprenant un sel utilisable en agriculture d'un acide carboxylique ou d'un acide minéral, ou de mélanges de tels sels d'acides carboxyliques ou minéraux, à condition que la solubilité dans l'eau des sels d'acides carboxyliques ou minéraux à 5° C et à pH 6-10 soit supérieure ou égale à 3 % et à condition également que le pH d'une solution 0,1 molaire du sel d'acide carboxylique ou minéral soit compris entre 6 et 10, et 1 à 50 % d'un ou plusieurs composés ayant une taille de particules de 1 à 20 micromètres choisis parmi

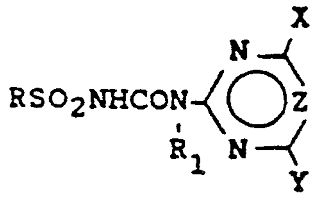

I

ou

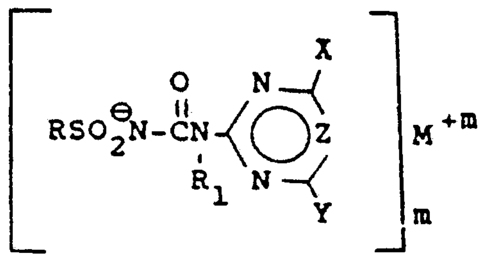

II

dans laquelle la concentration du sel ou des sels d'acides carboxyliques ou minéraux est comprise entre 3 % et la limite de saturation en sels de la solution aqueuse, et

R est

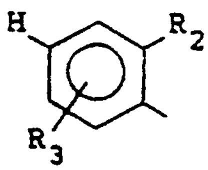 , 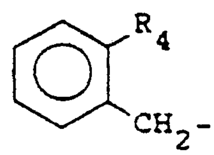 ou 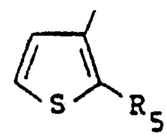 ;

$R_1$ est H ou $CH_3$ ;

$R_2$ est F, Cl, Br, un groupe alkyle en $C_1$ -$C_4$, $SO_2NR_6R_7$, $S(O)_nR_8$, $SO_2NCH_3(OCH_3)$, $CO_2R_9$, $OSO_2R_{10}$, $OR_{11}$, $NO_2$,

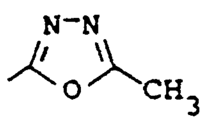 , 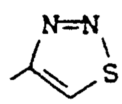 , 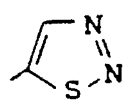 ou 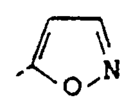 ;

$R_3$ est H, F, Cl, Br, $CH_3$, $OCH_3$ ou $CF_3$ ;

$R_4$ est Cl, $NO_2$ ou $CO_2R_{10}$ ;

$R_5$ est Cl, Br, $SO_2NR_6R_7$, $S(O)_nR_{10}$ ou $CO_2R_{10}$ ;

$R_6$ et $R_7$ sont indépendamment un groupe alkyle en $C_1$-$C_3$ ;

$R_8$ est un groupe alkyle en $C_1$-$C_3$) ou alkyle en $C_1$-$C_3$ substitué par 1 à 5 atomes de F, Cl ou Br ;

$R_9$ est un groupe alkyle en $C_1$ -$C_4$, $CH_2$ $CH_2OCH_3$, $CH_2CH_2Cl$ ou $CH_2CH=CH_2$ ;

$R_{10}$ est un groupe alkyle en $C_1$ -$C_3$ ;

$R_{11}$ est un groupe alkyle en $C_1$ -$C_4$, $CH_2CH=CH_2$, $CH_2C{\equiv}CH$ ou alkyle en $C_1$-$C_3$ substitué par 1 à 5 atomes de F, Cl ou Br ;

n est 0 ou 2 ;

Z est CH ou N ;

X est $CH_3$, $OCH_3$, Cl ou $OCHF_2$ ;

Y est $CH_3$, $OCH_3$, $CH(OCH_3)_2$ ou

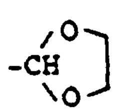 ;

et

$M^{+m}$ est un cation utilisable en agriculture ; et

m est 1, 2 ou 3 ;
avec la condition que si X est Cl, alors Z soit CH et Y soit $OCH_3$ ou $OCF_2H$.

**2.** Compositions de la revendication 1, dans lesquelles l'ion complémentaire du sel d'acide carboxylique ou minéral est un ion d'ammonium, d'ammonium substitué ou de métal alcalin et, si le composé est un sel de Formule II, alors M est également un ion d'ammonium, d'ammonium substitué ou de métal alcalin, et dans lesquelles ledit composé a une taille de particules de 2 à 8 micromètres.

**3.** Compositions de la revendication 2, dans lesquelles
R est

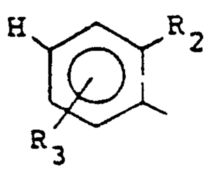
,
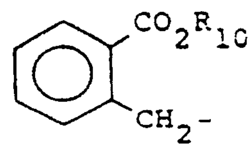
ou
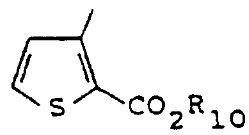
;

$R_1$ est H ;
$R_2$ est Cl, $CH_3$, $SO_2N(CH_3)_2$, $S(O)_nR_8$, $CO_2R_9$, $OSO_2R_{10}$, $OR_{11}$ ou $NO_2$ ;
$R_3$ est H, Cl, $CH_3$, $OCH_3$ ou $CF_3$ ;
$R_8$ est un groupe alkyle en $C_1$ -$C_3$, $CF_3$, $CF_2H$ ou $CF_2CF_2H$ ;
$R_9$ est un groupe alkyle en $C_1$ -$C_4$ ; et
$R_{11}$ est un groupe alkyle en $C_1$ -$C_4$, $CF_3$, $CF_2H$ ou $CF_2CF_2H$.

**4.** Compositions de la revendication 3, dans lesquelles le composé est un sel utilisable en agriculture de Formule II.

**5.** Compositions de la revendication 4, dans lesquelles le cation du composé de Formule II et le cation du sel d'acide carboxylique ou minéral sont identiques.

**6.** Compositions de l'une quelconque des revendications précédentes, comprenant un composé de Formule II où :
$R_2$ est F, Cl, Br, un groupe alkyle en $C_1$ -$C_4$, $SO_2NR_6R_7$, $S(O)_nR_8$, $SO_2NCH_3(OCH_3)$, $CO_2R_9$, $OSO_2R_{10}$, $OR_{11}$ ou $NO_2$ ;
$R_{11}$ est un groupe alkyle en $C_1$ $C_4$ ou alkyle en $C_1$ -$C_3$ substitué par 1 à 5 atomes de F, Cl ou Br ;
X est $CH_3$ ou $OCH_3$ ;
Y est $CH_3$, $OCH_3$ ou $CH(OCH_3)_2$ ;
ou bien X peut être Cl lorsque Y est $CH_3$ ou $OCH_3$.

**7.** Compositions de l'une quelconque des revendications précédentes, dans lesquelles la concentration du sel ou des sels d'acides carboxyliques ou minéraux est supérieure à 10 % et inférieure à 40 % ou à la limite de saturation en sels de la solution.

**8.** Compositions de l'une quelconque des revendications précédentes, dans lesquelles le sel ou les sels sont choisis parmi les sels d'acides carboxyliques en $C_1$ -$C_3$ et d'acides minéraux.

**9.** La composition de la revendication 7, dans laquelle le sel d'acide carboxylique ou minéral est choisi parmi le phosphate acide diammonique, l'acétate d'ammonium, l'acétate de sodium, l'acétate de lithium, l'acétate de potassium et le thiocyanate de sodium.

**10.** La composition de l'une quelconque des revendications précédentes, comprenant le sel d'ammonium du 2-chloro-N-[(4-méthoxy-6-méthyl-1,3,5-triazine-2-yl)aminocarbonyl]benzène-sulfonamide avec du phosphate acide diammonique.

**11.** La composition de l'une quelconque des revendications 1 à 9, dans laquelle le composé de Formule II est un sel utilisable en agriculture de l'ester éthylique d'acide 2-[[(4-chloro-6-méthoxypyrimidine-2-yl)-aminocarbonyl]aminosulfonyl]benzoïque.

12. La composition de l'une quelconque des revendications 1 à 9, dans laquelle le composé de Formule II est un sel utilisable en agriculture de l'ester méthylique d'acide 2-[[(4-méthoxy-6-méthyl-1,3,5-triazine-2-yl)aminocarbonyl]aminosulfonyl]benzoïque.

13. La composition de l'une quelconque des revendications 1 à 9, dans laquelle le composé de Formule II est un sel utilisable en agriculture de l'éthanesulfonate de N-[(4,6-diméthylpyrimidine-2-yl)-aminocarbonyl]-2-hydroxybenzène-sulfonamide.

14. La composition de l'une quelconque des revendications I à 9, dans laquelle le composé de Formule II est un sel utilisable en agriculture de l'ester méthylique d'acide 3-[[(4-méthoxy-6-méthyl-1,3,5-triazine-2-yl)aminocarbonyl]aminosulfonyl]-2-thiophènecarboxylique.

15. La composition de l'une quelconque des revendications 1 à 9, dans laquelle le composé de Formule II est un sel utilisable en agriculture de l'ester méthylique d'acide 2-[[(4,6-diméthylpyrimidine-2-yl)-aminocarbonyl]aminosulfonyl]benzoïque.

16. La composition de l'une quelconque des revendications 1 à 9, dans laquelle le composé de Formule II est un sel utilisable en agriculture du 2-chloro-N-[(4-méthoxy-6-méthyl-1,3,5-triazine-2-yl)-aminocarbonyl]benzène-sulfonamide.

17. La composition de l'une quelconque des revendications 1 à 9, dans laquelle le composé de Formule II est un sel utilisable en agriculture de l'ester méthylique d'acide 2-[[(4,6-diméthoxypyrimidine-2-yl)-aminocarbonyl]aminosulfonylméthyl]benzoïque.

18. La composition de l'une quelconque des revendications précédentes, avec un herbicide supplémentaire qui n'est pas choisi parmi I et II.

19. La composition de la revendication 1, dans laquelle :
(a) le composé de Formule II est tel que défini dans l'une quelconque des revendications 10 à 17 ;
(b) ledit sel d'un acide carboxylique ou minéral est tel que défini dans la revendication 9 ou bien est le phosphate acide diammonique lorsque ledit composé de Formule II est le composé défini dans la revendication 10 ;
(c) la concentration dudit composé de Formule II est de 10 à 40 % ;
(d) la concentration dudit sel d'un acide carboxylique ou minéral est supérieure à 10 % et inférieure à 40 % ou à la limite de saturation en sel de la solution ; et
(e) le pH de la composition se situe dans la plage de 7 à 9.

20. Un procédé pour la préparation d'une composition de l'une quelconque des revendications 1 à 19, qui consiste à former un mélange, dans un milieu aqueux, dudit sel utilisable en agriculture d'un acide carboxylique ou minéral et de 1 à 50 % dudit ou desdits composés choisis parmi I et II, la concentration du sel ou des sels d'acides carboxyliques ou minéraux étant comprise entre 3 % et la limite de saturation en sels de la solution aqueuse.

21. Un procédé pour la préparation d'une composition de l'une quelconque des revendications 1 à 19, qui consiste à
(i) mettre en suspension un composé de Formule I dans de l'eau contenant facultativement des agents tensioactifs et/ou des agents épaississants ou de mise en suspension ;
(ii) facultativement, neutraliser ledit mélange avec une base jusqu'à un pH de 6,0 à 10,0 pour obtenir un sel de Formule II ;
(iii) ajouter ledit sel utilisable en agriculture d'un acide carboxylique ou minéral, ou un mélange de tels sels ; et
(iv) broyer le mélange pour obtenir une suspension ayant la taille de particules désirée.

22. Un procédé pour lutter contre une végétation indésirable par application, au lieu où se trouve cette végétation, d'une quantité efficace d'une composition herbicide, caractérisé en ce que
cette composition herbicide comprend une dilution aqueuse de la composition de l'une quelconque des revendications 1 à 19.

Revendications pour l'Etat contractant suivant: AT

1. Un procédé de préparation d'une composition aqueuse stabilisée qui comprend la formation d'un mélange, dans un milieu aqueux, d'un sel utilisable en agriculture d'un acide carboxylique ou d'un acide minéral, ou de mélanges de tels sels d'acides carboxyliques ou minéraux, à condition que la solubilité dans l'eau des sels d'acides carboxyliques ou minéraux à 5 °C et à pH 6-10 soit supérieure ou égale à 3 % et à condition également que le pH d'une solution 0,1 molaire du sel d'acide carboxylique ou minéral soit compris entre 6 et 10, et de 1 à 50 % d'un ou plusieurs composés ayant une taille de particules de 1 à 20 micromètres choisis parmi

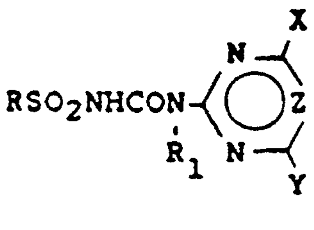

I

ou

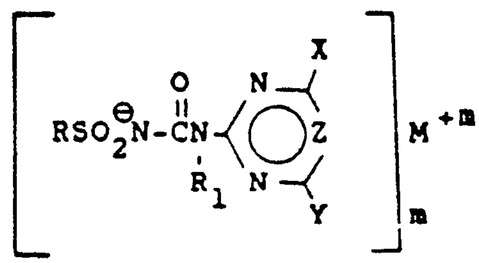

II

dans laquelle la concentration du sel ou des sels d'acides carboxyliques ou minéraux est comprise entre 3 % et la limite de saturation en sels de la solution aqueuse, et

R est

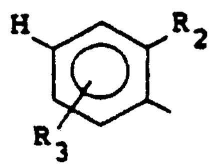

,

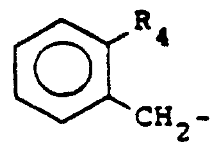

ou

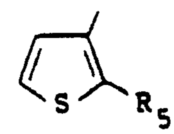

;

$R_1$ est H ou $CH_3$ ;

$R_2$ est F, Cl, Br, un groupe alkyle en $C_1$ -$C_4$, $SO_2NR_6R_7$, $S(O)_nR_8$, $SO_2NCH_3(OCH_3)$, $CO_2R_9$, $OSO_2R_{10}$, $OR_{11}$ , $NO_2$,

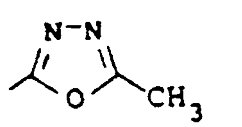

,

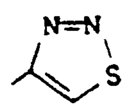

,

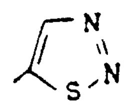

ou

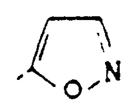

;

$R_3$ est H, F, Cl, Br, $CH_3$, $OCH_3$ ou $CF_3$ ;

$R_4$ est Cl, $NO_2$ ou $CO_2R_{10}$ ;

$R_5$ est Cl, Br, $SO_2NR_6R_7$, $S(O)_nR_{10}$ ou $CO_2R_{10}$ ;

$R_6$ et $R_7$ sont indépendamment un groupe alkyle en $C_1$ -$C_3$ ;

$R_8$ est un groupe alkyle en $C_1$ -$C_3$ ou alkyle en $C_1$ -$C_3$ substitué par 1 à 5 atomes de F, Cl ou Br ;

$R_9$ est un groupe alkyle en $C_1$ -$C_4$, $CH_2CH_2OCH_3$, $CH_2CH_2Cl$ ou $CH_2CH=CH_2$ ;

$R_{10}$ est un groupe alkyle en $C_1$ -$C_3$ ;

$R_{11}$ est un groupe alkyle en $C_1$ -$C_4$, $CH_2CH=CH_2$, $CH_2C{\equiv}CH$ ou alkyle en $C_1$ -$C_3$ substitué par 1 à 5 atomes de F, Cl ou Br ;

n est 0 ou 2 ;

Z est CH ou N ;

X est $CH_3$, $OCH_3$, Cl ou $OCHF_2$ ;

Y est $CH_3$, $OCH_3$, $CH(OCH_3)_2$ ou

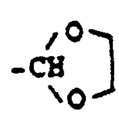

;

et
$M^{+m}$ est un cation utilisable en agriculture ; et
m est 1, 2 ou 3 ;
avec la condition que si X est Cl, alors Z soit CH et Y soit $OCH_3$ ou $OCF_2H$.

**2.** Un procédé selon la revendication 1, qui consiste à
(i) mettre en suspension un composé de Formule I dans de l'eau contenant facultativement des agents tensioactifs et/ou des agents épaississants ou de mise en suspension ;
(ii) facultativement, neutraliser ledit mélange avec une base jusqu'à un pH de 6,0 à 10,0 pour obtenir un sel de Formule II ;
(iii) ajouter ledit sel utilisable en agriculture d'un acide carboxylique ou minéral, ou un mélange de tels sels ; et
(iv) broyer le mélange pour obtenir une suspension ayant la taille de particules désirée.

**3.** Un procédé selon la revendication 1 ou 2, dans lequel l'ion complémentaire du sel d'acide carboxylique ou minéral est un ion d'ammonium, d'ammonium substitué ou de métal alcalin et, si le composé est un sel de Formule II, alors M est également un ton d'ammonium, d'ammonium substitué ou de métal alcalin, et dans lesquelles ledit composé a une taille de particules de 2 à 8 micromètres.

**4.** Un procédé selon la revendication 3, dans lequel
R est

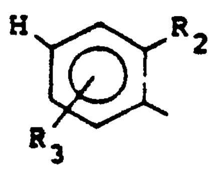 , 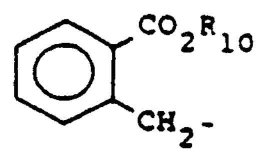 ou 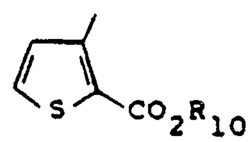 ;

$R_1$ est H ;
$R_2$ est Cl, $CH_3$ , $SO_2N(CH_3)_2$, $S(O)_nR_8$, $CO_2R_9$, $OSO_2R_{10}$, $OR_{11}$ ou $NO_2$ ;
$R_3$ est H, Cl, $CH_3$, $OCH_3$ ou $CF_3$ ;
$R_8$ est un groupe alkyle en $C_1$ -$C_3$, $CF_3$, $CF_2H$ ou $CF_2CF_2H$ ;
$R_9$ est un groupe alkyle en $C_1$ -$C_4$ ; et
$R_{11}$ est un groupe alkyle en $C_1$ -$C_4$, $CF_3$, $CF_2H$ ou $CF_2CF_2H$.

**5.** Un procédé selon la revendication 4, dans lequel le composé est un sel utilisable en agriculture de Formule II.

**6.** Un procédé selon la revendication 4, dans lequel le cation du composé de Formule II et le cation du sel d'acide carboxylique ou minéral sont identiques.

**7.** Un procédé selon l'une quelconque des revendications précédentes, dans lequel on utilise un composé de Formule II où :
$R_2$ est F, Cl, Br, un groupe alkyle en $C_1$ -$C_4$, $SO_2NR_6R_7$, $S(O)_nR_8$, $SO_2NCH_3(OCH_3)$, $CO_2R_9$, $OSO_2R_{10}$, $OR_{11}$ ou $NO_2$ ;
$R_{11}$ est un groupe alkyle en $C_1$ -$C_4$ ou alkyle en $C_1$ -$C_3$ substitué par 1 à 5 atomes de F, Cl ou Br ;
X est $CH_3$ ou $OCH_3$ ;
Y est $CH_3$, $OCH_3$ ou $CH(OCH_3)_2$ ;
ou bien X peut être Cl lorsque Y est $CH_3$ ou $OCH_3$.

**8.** Un procédé selon l'une quelconque des revendications précédentes, dans lequel la concentration du sel ou des sels d'acides carboxyliques ou minéraux est supérieure à 10 % et inférieure à 40 % ou à la limite de saturation en sels de la solution.

**9.** Un procédé selon l'une quelconque des revendications précédentes, dans lequel le sel ou les sels sont choisis parmi les sels d'acides carboxyliques en $C_1$ -$C_3$ et d'acides minéraux.

**10.** Un procédé selon la revendication 7, dans lequel le sel d'acide carboxylique ou minéral est choisi

parmi le phosphate acide diammonique, l'acétate d'ammonium, l'acétate de sodium, l'acétate de lithium, l'acétate de potassium et le thiocyanate de sodium.

11. Un procédé selon l'une quelconque des revendications précédentes, dans lequel ladite composition comprend le sel d'ammonium du 2-chloro-N-[(4-méthoxy-6-méthyl-1,3,5-triazine-2-yl)aminocarbonyl]-benzènesulfonamide avec du phosphate acide diammonique.

12. Un procédé selon l'une quelconque des revendications 1 à 10, dans lequel le composé de Formule II est un sel utilisable en agriculture de l'ester éthylique d'acide 2-[[(4-chloro-6-méthoxypyrimidine-2-yl)-aminocarbonyl]aminosulfonyl]benzoïque.

13. Un procédé selon l'une quelconque des revendications 1 à 10, dans lequel le composé de Formule II est un sel utilisable en agriculture de l'ester méthylique d'acide 2-[[(4-méthoxy-6-méthyl-1,3,5-triazine-2-yl)aminocarbonyl]aminosulfonyl]benzoïque.

14. Un procédé selon l'une quelconque des revendications 1 à 10, dans lequel le composé de Formule II est un sel utilisable en agriculture de l'éthanesulfonate de N-[(4,6-diméthylpyrimidine-2-yl)-aminocarbonyl]-2-hydroxybenzène-sulfonamide.

15. Un procédé selon l'une quelconque des revendications 1 à 10, dans lequel le composé de Formule II est un sel utilisable en agriculture de l'ester méthylique d'acide 3-[[(4-méthoxy-6-méthyl-1,3,5-triazine-2-yl)aminocarbonyl]aminosulfonyl]-2-thiophènecarboxylique.

16. Un procédé selon l'une quelconque des revendications 1 à 10, dans lequel le composé de Formule II est un sel utilisable en agriculture de l'ester méthylique d'acide 2-[[(4,6-diméthylpyrimidine-2-yl)-aminocarbonyl]aminosulfonyl]benzoïque.

17. Un procédé selon l'une quelconque des revendications 1 à 10, dans lequel le composé de Formule II est un sel utilisable en agriculture du 2-chloro-N-[(4-méthoxy-6-méthyl-1,3,5-triazine-2-yl)-aminocarbonyl]benzène-sulfonamide.

18. Un procédé selon l'une quelconque des revendications 1 à 10, dans lequel le composé de Formule II est un sel utilisable en agriculture de l'ester méthylique d'acide 2-[[(4,6-diméthoxypyrimidine-2-yl)-aminocarbonyl]aminosulfonylméthyl]benzoïque.

19. Un procédé selon l'une quelconque des revendications précédentes, dans lequel on ajoute un herbicide supplémentaire qui n'est pas choisi parmi I et II.

20. Un procédé selon la revendication 1, dans lequel :
(a) le composé de Formule II est tel que défini dans l'une quelconque des revendications 11 à 18 ;
(b) ledit sel d'un acide carboxylique ou minéral est tel que défini dans la revendication 10 ou bien est le phosphate acide diammonique lorsque ledit composé de Formule II est le composé défini dans la revendication 11 ;
(c) la concentration dudit composé de Formule II est de 10 à 40 % ;
(d) la concentration dudit sel d'un acide carboxylique ou minéral est supérieure à 10 % et inférieure à 40 % ou à la limite de saturation en sel de la solution ; et
(e) le pH de la composition se situe dans la plage de 7 à 9.

21. Un procédé pour lutter contre une végétation indésirable par application, au lieu où se trouve cette végétation, d'une quantité efficace d'une composition herbicide, dans lequel
cette composition herbicide comprend une dilution aqueuse de la composition de l'une quelconque des revendications 1 ou 3 à 20.

## Ansprüche

1. Stabilisierte wäßrige Zusammensetzung, die ein landwirtschaftlich geeignetes Salz einer Carbonsäure oder einer anorganischen Säure oder Mischungen solcher Carbonsäure- oder anorganischen Säuresalze umfaßt, mit der Maßgabe, daß die Wasserlöslichkeit der Carbonsäure- oder anorganischen Säuresalze bei 5°C und einem pH-Wert von 6 bis 10 größer als oder gleich 3 % ist und mit der weiteren Maßgabe, daß der pH-Wert einer 0,1 molaren Lösung des Carbonsäure- oder anorganischen Säuresalzes zwischen 6 und 10 liegt, sowie 1 bis 50 % einer oder mehrerer Verbindungen mit einer Teilchengröße von 1 bis 20 Mikron, ausgewählt aus

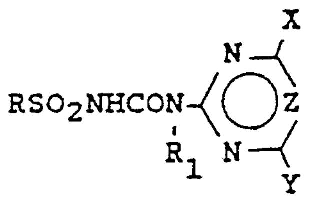

I

oder

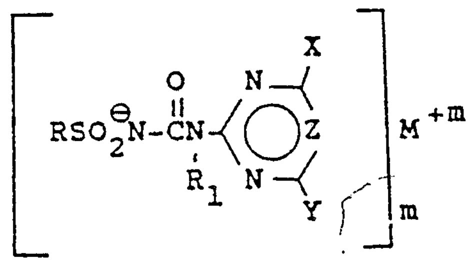

II

worin die Konzentration des Carbonsäure- oder anorganischen Säuresalzes oder dieser Salze zwischen 3 % und der Salzsättigungsgrenze der wäßrigen Lösung liegt und

R

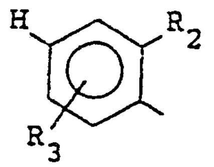

,

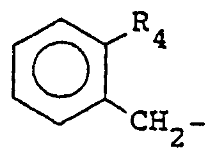

oder

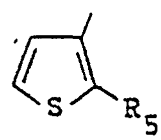

ist;

$R_1$ H oder $CH_3$ ist;

$R_2$ F, Cl, Br, $C_1$-$C_4$-Alkyl, $SO_2NR_6R_7$, $S(O)_nR_8$, $SO_2NCH_3(OCH_3)$, $CO_2R_9$, $OSO_2R_{10}$, $OR_{11}$, $NO_2$,

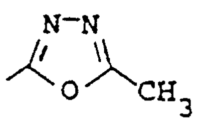

,

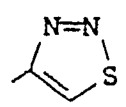

,

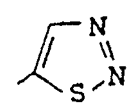

oder

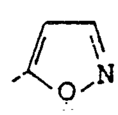

ist;

$R_3$ H, F, Cl, Br, $CH_3$, $OCH_3$ oder $CF_3$ ist;

$R_4$ Cl, $NO_2$ oder $CO_2R_{10}$ ist;

$R_5$ Cl, Br, $SO_2NR_6R_7$, $S(O)_nR_{10}$ oder $CO_2R_{10}$ ist;

$R_6$ und $R_7$ unabhängig $C_1$-$C_3$-Alkyl sind;

$R_8$ $C_1$-$C_3$-Alkyl oder durch 1 bis 5 Atome aus F, Cl oder Br substituiertes $C_1$-$C_3$-Alkyl ist;

$R_9$ $C_1$-$C_4$-Alkyl, $CH_2CH_2OCH_3$, $CH_2CH_2Cl$ oder $CH_2CH=CH_2$ ist;

$R_{10}$ $C_1$-$C_3$-Alkyl ist;

$R_{11}$ $C_1$-$C_4$-Alkyl, $CH_2CH=CH_2$, $CH_2C\equiv CH$ oder mit 1 bis 5 Atomen aus F, Cl oder Br substituiertes $C_1$-$C_3$-Alkyl ist;

n 0 oder 2 ist;

Z CH oder N ist;

X $CH_3$, $OCH_3$, Cl oder $OCHF_2$ ist;

Y $CH_3$, $OCH_3$, $CH(OCH_3)_2$, $OCHF_2$ oder

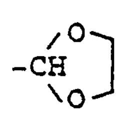

ist und

$M^{+m}$ ein landwirtschaftlich geeignetes Kation ist und

m 1, 2 oder 3 ist;

mit der Maßgabe, daß wenn X Cl ist, Z CH ist und Y $OCH_3$ oder $OCF_2H$ ist.

2. Zusammensetzungen nach Anspruch 1, worin das Gegenion des Carbonsäure- oder anorganischen Säuresalzes ein Ammonium-, substitutiertes Ammonium- oder Alkalimetallion ist und wenn die Verbindung ein Salz der Formel II ist, dann M ebenfalls ein Ammonium-, substituiertes Ammonium- oder Alkalimetallion ist, wobei die Verbindung eine Teilchengröße von 2 bis 8 Mikron aufweist.

3. Zusammensetzung nach Anspruch 2, worin
R

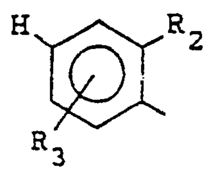 , 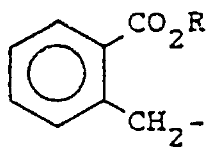 oder 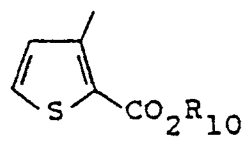 ist;

$R_1$ H ist;
$R_2$ Cl, $CH_3$, $SO_2N(CH_3)_2$, $S(O)_nR_8$, $CO_2R_9$, $OSO_2R_{10}$, $OR_{11}$ oder $NO_2$ ist;
$R_3$ H, Cl, $CH_3$, $OCH_3$ oder $CF_3$ ist;
$R_8$ $C_1$-$C_3$-Alkyl, $CF_3$, $CF_2H$ oder $CF_2CF_2H$ ist;
R9 Cl-C4-Alkyl ist; und
$R_{11}$ $C_1$-$C_4$-Alkyl, $CF_3$, $CF_2H$ oder $CF_2CF_2H$ ist.

4. Zusammensetzungen nach Anspruch 3, worin die Verbindung ein landwirtschaftlich geeignetes Salz der Formel II ist.

5. Zusammensetzungen nach Anspruch 4, worin das Kation der Verbindung der Formel II und das Kation des Carbonsäure- oder anorganischen Säuresalzes identisch sind.

6. Zusammensetzungen nach einem der vorstehenden Ansprüche, welche eine Verbindung der Formel II umfaßt, worin
$R_2$ F, Cl, Br, $C_1$-$C_4$-Alkyl, $SO_2NR_6R_7$, $S(O)_nR_8$, $SO_2NCH_3(OCH_3)$, $CO_2R_9$, $OSO_2R_{10}$, $OR_{11}$ oder $NO_2$ ist;
$R_{11}$ $C_1$-$C_4$-Alkyl oder durch 1 bis 5 Atome aus F, Cl oder Br substituiertes $C_1$-$C_3$-Alkyl ist;
X $CH_3$ oder $OCH_3$ ist;
Y $CH_3$, $OCH_3$ oder $CH(OCH_3)_2$ ist;
oder X Cl sein kann, wenn Y $CH_3$ oder $OCH_3$ ist.

7. Zusammensetzungen nach einem der vorstehenden Ansprüche, worin die Konzentration des Carbonsäure- oder anorganischen Säuresalzes oder dieser Salze größer als 10% und kleiner als 40 % oder als die Salzsättigungsgrenze der Lösung ist.

8. Zusammensetzungen nach einem der vorstehenden Ansprüche, worin das Salz oder die Salze aus $C_1$-$C_3$-Carbonsäuren und anorganischen Säuresalzen ausgewählt sind.

9. Zusammensetzung nach Anspruch 7, worin das Carbonsäure-oder anorganische Säuresalz aus Diammoniumhydrogenphosphat, Ammoniumacetat, Natriumacetat, Lithiumacetat, Kaliumacetat oder Natriumthiocyanat ausgewählt ist.

10. Zusammensetzung nach einem der vorstehenden Ansprüche, welche 2-Chlor-N-[(4-methoxy-6-methyl-1,3,5-triazin-2-yl)aminocarbonyl]benzolsulfonamid, Ammoniumsalz mit Diammoniumhydrogenphosphat, umfaßt.

11. Zusammensetzung nach einem der Ansprüche 1 bis 9, worin die Verbindung der Formel 11 ein landwirtschaftlich geeignetes Salz von 2-[[4-Chlor-6-methoxy-pyrimidin-2-yl)aminocarbonyl]-aminosulfonyl]benzoesäureethylester ist.

12. Zusammensetzung nach einem der Ansprüche 1 bis 9, worin die Verbindung der Formel II ein landwirtschaftlich geeignetes Salz von 2-[[(4-Methoxy-6-methyl-1,3,5-triazin-2-yl)aminocarbonyl]-

aminosulfonyl]benzoesäure Methylester ist.

13. Zusammensetzung nach einem der Ansprüche 1 bis 9, worin die Verbindung der Formel II ein landwirtschaftlich geeignetes Salz von N-[(4,6-Dimethylpyrimidin-2-yl)aminocarbonyl]-2-hydroxybenzolsulfonamid-ethansulfonat ist.

14. Zusammensetzung nach einem der Ansprüche 1 bis 9, worin die Verbindung der Formel II ein landwirtschaftlich geeignetes Salz von 3-[[4-Methoxy-6-methyl-1,3,5-triazin-2-yl)aminocarbonyl]-aminosulfonyl]-2-thiophencarbonsäuremethylester ist.

15. Zusammensetzung nach einem der Ansprüche 1 bis 9, worin die Verbindung der Formel II ein landwirtschaftlich geeignetes Salz von 2-[[4,6-Dimethylpyrimidin-2-yl)aminocarbonyl]-aminosulfonyl]-benzoesäuremethylester ist.

16. Zusammensetzung nach einem der Ansprüche 1 bis 9, worin die Verbindung der Formel II ein landwirtschaftlich geeignetes Salz von 2-Chlor-N-[(4-methoxy-6-methyl-1,3,5-triazin-2-yl)-aminocarbonyl]benzolsulfonamid ist.

17. Zusammensetzung nach einem der Ansprüche 1 bis 9, worin die Verbindung der Formel II ein landwirtschaftlich geeignetes Salz von 2-[[(4,6-Dimethoxypyrimidin-2-yl)aminocarbonyl]-aminosulfonylmethyl]benzoesäuremethylester ist.

18. Zusammensetzung nach einem der vorstehenden Ansprüche mit einem weiteren Herbicid, das nicht aus I oder II ausgewählt ist.

19. Zusammensetzung nach Anspruch 1, worin
   (a) die Verbindung der Formel II in einem der Ansprüche 10 bis I7 definiert ist;
   (b) das Salz einer Carbonsäure oder anorganischen Säure wie in Anspruch 9 definiert ist oder die Diammoniumhydrogenphosphat ist, wenn die Verbindung der Formel II die in Anspruch 10 definierte Verbindung ist;
   (c) die Konzentration der Verbindung der Formel II 10 bis 40 % beträgt;
   (d) die Konzentration des Salzes einer Carbonsäure oder anorganischen Säure größer als 10 % und kleiner als 40 % oder als die Salzsättigungsgrenze der Lösung ist; und
   (e) der pH-Wert der Zusammensetzung im Bereich von 7 bis 9 liegt.

20. Verfahren zur Herstellung einer Zusammensetzung nach einem der Ansprüche 1 bis 19 durch Bildung einer Mischung des landwirtschaftlich bezeichneten Salzes einer Carbonsäure oder anorganischen Säure sowie aus 1 bis 50 % einer oder mehrerer aus I und II ausgewählter Verbindungen in einem wäßrigen Medium, wobei die Konzentration des Carbonsäure- oder anorganischen Säuresalzes oder dieser Salze zwischen 3 % und der Salzsättigungsgrenze der wäßrigen Lösung liegt.

21. Verfahren zur Herstellung einer Zusammensetzung nach einem der Ansprüche 1 bis 19 durch
   (i) Suspendieren einer Verbindung der Formel I in Wasser, das gegebenenfalls oberflächenaktive Mittel und/oder Verdickungs- oder Suspendierungsmittel enthält;
   (ii) gegebenenfalls Neutralisieren dieser Mischung mit Base auf einen pH-Wert von 6,0 bis 10,0 unter Erhalt eines Salzes der Formel II;
   (iii) Zugeben des landwirtschaftlich geeigneten Salzes einer Carbonsäure oder einer anorganischen Säure oder einer Mischung davon; und
   (iv) Vermahlen der Mischung unter Erhalt einer Aufschlämmung der erwünschten Teilchengröße.

22. Verfahren zur Bekämpfung unerwünschter Vegetation durch Anwendung einer wirksamen Menge einer herbiciden Zusammensetzung auf den Ort solcher Vegetation, dadurch gekennzeichnet, daß die herbicide Zusammensetzung eine wäßrige Verdünnung der Zusammensetzung nach einem der Ansprüche 1 bis 19 umfaßt.

Patentansprüche für folgenden Vertragsstaat: AT

1. Verfahren zur Herstellung einer stabilisierten wäßrigen Zusammensetzung durch Bilden einer Mischung

eines landwirtschaftlich geeigneten Salzes einer Carbonsäure oder einer anorganischen Säure oder von Mischungen solcher Carbonsäure- oder anorganischer Säuresalze in einem wäßrigen Medium, mit der Maßgabe, daß die Wasserlöslichkeit der Carbonsäureoder anorganischen Säuresalze bei 5 °C und einem pH-Wert von 6 bis 10 größer als oder gleich 3 % ist und mit der weiteren Maßgabe, daß der pH-Wert einer 0,1 molaren Lösung des Carbonsäure- oder anorganischen Säuresalzes zwischen 6 und 10 liegt, sowie 1 bis 50 % einer oder mehrerer Verbindungen mit einer Teilchengröße von 1 bis 20 Mikron, ausgewählt aus

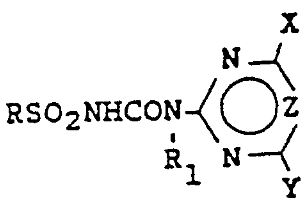

I

oder

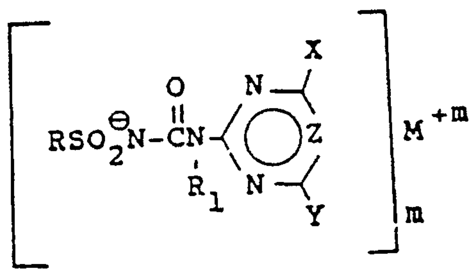

II

worin die Konzentration des Carbonsäure- oder anorganischen Säuresalzes oder dieser Salze zwischen 3 % und der Salzsättigungsgrenze der wäßrigen Lösung liegt und

R

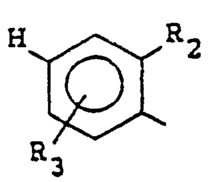 , 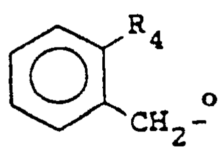 oder 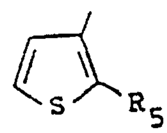 ist;

$R_1$ H oder $CH_3$ ist;

$R_2$ F, Cl, Br, $C_1$-$C_4$-Alkyl, $SO_2NR_6R_7$, $S(O)_nR_8$, $SO_2NCH_3(OCH_3)$, $CO_2R_9$, $OSO_2R_{10}$, $OR_{11}$, $NO_2$,

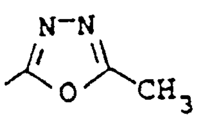 , 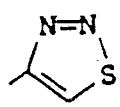 , 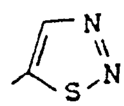 oder 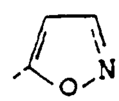

$R_3$ H, F, Cl, Br, $CH_3$, $OCH_3$ oder $CF_3$ ist;

$R_4$ Cl, $NO_2$ oder $CO_2R_{10}$ ist;

$R_5$ Cl, Br, $SO_2NR_6R_7$, $S(O)_nR_{10}$ oder $CO_2R_{10}$ ist;

$R_6$ und $R_7$ unabhängig $C_1$-$C_3$-Alkyl sind;

$R_8$ $C_1$-$C_3$-Alkyl oder durch 1 bis 5 Atome aus F, Cl oder Br substituiertes $C_1$-$C_3$-Alkyl ist;

$R_9$ $C_1$-$C_4$-Alkyl, $CH_2CH_2OCH_3$, $CH_2CH_2Cl$ oder $CH_2CH=CH_2$ ist;

$R_{10}$ $C_1$-$C_3$-Alkyl ist;

$R_{11}$ $C_1$-$C_4$-Alkyl, $CH_2CH=CH_2$, $CH_2C\equiv CH$ oder mit 1 bis 5 Atomen aus F, Cl oder Br substituiertes $C_1$-$C_3$-Alkyl ist;

n 0 oder 2 ist;

Z CH oder N ist;

X $CH_3$, $OCH_3$, Cl oder $OCHF_2$ ist;

Y $CH_3$, $OCH_3$, $CH(OCH_3)_2$, $OCHF_2$ oder

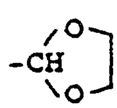

ist und

$M^{+m}$ ein landwirtschaftlich geeignetes Kation ist und
m 1, 2 oder 3 ist;
mit der Maßgabe, daß wenn X Cl ist, Z CH ist und Y $OCH_3$ oder $OCF_2H$ ist.

**2.** Verfahren nach Anspruch 1, welches umfaßt:
(i) Suspendieren einer Verbindung der Formel I in Wasser, das gegebenenfalls oberflächenaktive Mittel und/oder Verdickungs- oder Suspendierungsmittel enthält;
(ii) gegebenenfalls Neutralisieren dieser Mischung mit Base auf einen pH-Wert von 6,0 bis 10,0 unter Erhalt eines Salzes der Formel II;
(iii) Zugeben des landwirtschaftlich geeigneten Salzes einer Carbonsäure oder einer anorganischen Säure oder einer Mischung davon; und
(iv) Vermahlen der Mischung unter Erhalt einer Aufschlämmung der erwünschten Teilchengröße.

**3.** Verfahren nach Anspruch 1 oder 2, worin das Gegenion des Carbonsäure- oder anorganischen Säuresalzes ein Ammonium-, substitutiertes Ammonium- oder Alkalimetallion ist und wenn die Verbindung ein Salz der Formel II ist, dann M ebenfalls ein Ammonium-, substituiertes Ammonium- oder Alkalimetallion ist, wobei die Verbindung eine Teilchengröße von 2 bis 8 Mikron aufweist.

**4.** Verfahren nach Anspruch 3, worin
R

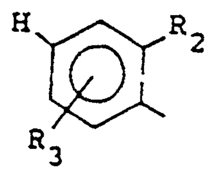 , 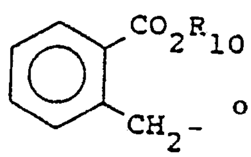 oder 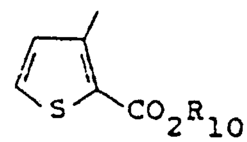

$R_1$ H ist;
$R_2$ Cl, $CH_3$, $SO_2N(CH_3)_2$, $S(O)_nR_8$, $CO_2R_9$, $OSO_2R_{10}$, $OR_{11}$ oder $NO_2$ ist;
$R_3$ H, Cl, $CH_3$, $OCH_3$ oder $CF_3$ ist;
$R_8$ $C_1$-$C_3$-Alkyl, $CF_3$, $CF_2H$ oder $CF_2CF_2H$ ist;
$R_9$ $C_1$-$C_4$-Alkyl ist; und
$R_{11}$ $C_1$-$C_4$-Alkyl, $CF_3$, $CF_2H$ oder $CF_2CF_2H$ ist.

**5.** Verfahren nach Anspruch 4, worin die Verbindung ein landwirtschaftlich geeignetes Salz der Formel II ist.

**6.** Verfahren nach Anspruch 5, worin das Kation der Verbindung der Formel II und das Kation des Carbonsäure-oder anorganischen Säuresalzes identisch sind.

**7.** Verfahren nach einem der vorstehenden Ansprüche, worin eine Verbindung der Formel II verwandt wird, worin
$R_2$ F, Cl, Br, $C_1$-$C_4$-Alkyl, $SO_2NR_6R_7$, $S(O)_nR_8$, $SO_2NCH_3(OCH_3)$, $CO_2R_9$, $OSO_2R_{10}$, $OR_{11}$ oder $NO_2$ ist;
$R_{11}$ $C_1$-$C_4$-Alkyl oder durch 1 bis 5 Atome aus F, Cl oder Br substituiertes $C_1$-$C_3$-Alkyl ist;
X $CH_3$ oder $OCH_3$ ist;
Y $CH_3$, $OCH_3$ oder $CH(OCH_3)_2$ ist;
oder X Cl sein kann, wenn Y $CH_3$ oder $OCH_3$ ist.

**8.** Verfahren nach einem der vorstehenden Ansprüche, worin die Konzentration des Carbonsäure- oder anorganischen Säuresalzes oder dieser Salze größer als 10 % und kleiner als 40 % oder als die Salzsättigungsgrenze der Lösung ist.

**9.** Verfahren nach einem der vorstehenden Ansprüche, worin das Salz oder die Salze aus $C_1$-$C_3$-Carbonsäuren und anorganischen Säuresalzen ausgewählt sind.

**10.** Verfahren nach Anspruch 7, worin das Carbonsäureoder anorganische Säuresalz aus Diammoniumhydrogenphosphat, Ammoniumacetat, Natriumacetat, Lithiumacetat, Kaliumacetat oder Natriumthiocyanat ausgewählt ist.

11. Verfahren nach einem der vorstehenden Ansprüche, worin die Zusammensetzung 2-Chlor-N-[(4-methoxy-6-methyl-1,3,5-triazin-2-yl)aminocarbonyl]benzolsulfonamid, Ammoniumsalz mit Diammoniumhydrogenphosphat umfaßt.

12. Verfahren nach einem der Ansprüche 1 bis 10, worin die Verbindung der Formel II ein landwirtschaftlich geeignetes Salz von 2-[[4-Chlor-6-methoxypyrimidin-2-yl)aminocarbonyl]-aminosulfonyl]-benzoesäureethylester ist.

13. Verfahren nach einem der Ansprüche 1 bis 10, worin die Verbindung der Formel II ein landwirtschaftlich geeignetes Salz von 2-[[(4-Methoxy-6-methyl-1,3,5-triazin-2-yl)aminocarbonyl]aminosul-fonyl]-benzoesäure methylester ist.

14. Verfahren nach einem der Ansprüche 1 bis 10, worin die Verbindung der Formel II ein landwirtschaftlich geeignetes Salz von N-[(4,6-Dimethylpyrimidin-2-yl)aminocarbonyl]-2-hydroxybenzolsulfonamid-ethansulfonat ist.

15. Verfahren nach einem der Ansprüche 1 bis 10, worin die Verbindung der Formel II ein landwirtschaftlich geeignetes Salz von 3-[[4-Methoxy-6-methyl-1,3,5-triazin-2-yl)aminocarbonyl]aminosulfonyl]-2-thiophencarbonsäuremethylester ist.

16. Verfahren nach einem der Ansprüche 1 bis 10, worin die Verbindung der Formel II ein landwirtschaftlich geeignetes Salz von 2-[[4,6-Dimethylpyrimidin-2-yl)aminocarbonyl]aminosulfonyl]-benzoesäuremethylester ist.

17. Verfahren nach einem der Ansprüche 1 bis 10, worin die Verbindung der Formel II ein landwirtschaftlich geeignetes Salz von 2-Chlor-N-[(4-methoxy-6-methyl-1,3,5-triazin-2-yl)-aminocarbonyl]benzolsulfonamid ist.

18. Verfahren nach einem der Ansprüche 1 bis 10, worin die Verbindung der Formel II ein landwirtschaftlich geeignetes Salz von 2-[[(4,6-Dimethoxypyrimidin-2-yl)aminocarbonyl]-aminosulfonylmethyl]benzoesäure methylester ist.

19. Verfahren nach einem der vorstehenden Ansprüche mit einem weiteren Herbicid, das nicht aus I oder II ausgewählt ist.

20. Verfahren nach Anspruch 1, worin
(a) die Verbindung der Formel II in einem der Ansprüche 11 bis 18 definiert ist;
(b) das Salz einer Carbonsäure oder anorganischen Säure wie in Anspruch 10 definiert ist oder die Diammoniumhydrogenphosphat ist, wenn die Verbindung der Formel II die in Anspruch 11 definierte Verbindung ist;
(c) die Konzentration der Verbindung der Formel II 10 bis 40 % beträgt;
(d) die Konzentration des Salzes einer Carbonsäure oder anorganischen Säure größer als 10 % und kleiner als 40 % oder als die Salzsättigungsgrenze der Lösung ist; und
(e) der pH-Wert der Zusammensetzung im Bereich von 7 bis 9 liegt.

21. Verfahren zur Bekämpfung unerwünschter Vegetation durch Anwendung einer wirksamen Menge einer herbiciden Zusammensetzung auf den Ort solcher Vegetation, dadurch gekennzeichnet, daß die herbicide Zusammensetzung eine wäßrige Verdünnung der Zusammensetzung nach einem der Ansprüche 1 oder 3 bis 20 umfaßt.